(19) Europäisches Patentamt / European Patent Office / Office européen des brevets

(11) **EP 3 310 736 B1**

(12) # EUROPÄISCHE PATENTSCHRIFT

(45) Veröffentlichungstag und Bekanntmachung des Hinweises auf die Patenterteilung:
**30.01.2019 Patentblatt 2019/05**

(21) Anmeldenummer: **16726558.6**

(22) Anmeldetag: **31.05.2016**

(51) Int Cl.:
***C04B 26/06*** *(2006.01)* ***C08L 3/00*** *(2006.01)*
***C08L 33/26*** *(2006.01)* ***C08F 220/56*** *(2006.01)*

(86) Internationale Anmeldenummer:
**PCT/EP2016/062289**

(87) Internationale Veröffentlichungsnummer:
**WO 2016/202582 (22.12.2016 Gazette 2016/51)**

(54) **WASSERLÖSLICHE ODER WASSERQUELLBARE POLYMERE ALS WASSERVERLUSTREDUZIERER IN ZEMENTSCHLÄMMEN**

WATER-SOLUBLE OR WATER-SWELLABLE POLYMERS AS FLUID LOSS ADDITIVES FOR CEMENT SLURRIES

POLYMÈRES SOLUBLES DANS L'EAU OU GONFLANT DANS L'EAU COMME ADDITIFS DE PERTE DE FLUIDE DANS DES BOUES DE CIMENT

(84) Benannte Vertragsstaaten:
**DE ES FR GB NL NO**

(30) Priorität: **17.06.2015 EP 15001797**

(43) Veröffentlichungstag der Anmeldung:
**25.04.2018 Patentblatt 2018/17**

(73) Patentinhaber: **Clariant International Ltd**
**4132 Muttenz (CH)**

(72) Erfinder:
- **FISCHER, Dirk**
  **55278 Hahnheim (DE)**
- **KAYSER, Christoph**
  **55127 Mainz (DE)**
- **DIEMEL, Claudia**
  **63571 Gelnhausen (DE)**
- **TONHAUSER, Jürgen**
  **65375 Oestrich-Winkeld (DE)**
- **SCHÄFER, Michael**
  **63584 Gründau-Rothenbergen (DE)**

(74) Vertreter: **Mikulecky, Klaus**
**Clariant Produkte (Deutschland) GmbH**
**Patent & License Management Chemicals**
**Industriepark Höchst, G 860**
**65926 Frankfurt am Main (DE)**

(56) Entgegenhaltungen:
**EP-A2- 0 244 981 WO-A1-99/26991**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 310 736 B1

## Beschreibung

Die vorliegende Erfindung betrifft wasserlösliche oder wasserquellbare Polymere auf Basis von Acryl-, Methacryl- oder Ethacrylamidoalkylsulfonsäure oder deren Salzen und Carboxyalkylacrylat, -methacrylat oder -ethacrylat oder Oligomeren dieser Carboxy-Verbindungen, und Acrylamiden oder Alkylacrylamiden, ein Verfahren zur Herstellung dieser Polymere und deren Verwendung als Wasserverlustreduzierer in Zementschlämmen zur Zementation von Tiefbohrungen zur Reduzierung des Wasserverlustes an der Bohrlochswandung (Fluid Loss Additive).

Bei Tiefbohrungen zur Erschließung von Erdöl- und Erdgaslagerstätten ist die Verwendung von Zementschlämmen seit langem bekannt. Nachdem das Bohrloch eine bestimmte Teufe erreicht hat, werden sog. Futterrohre in das Bohrloch eingebracht. Zu diesem Zweck müssen die Futterrohre fixiert werden, d. h. in den Hohlraum zwischen dem Gebirge und den Futterrohren wird eine Zementschlämme eingepumpt, die zu einem festen Gestein aushärtet. Der sich bildende Zementstein muss undurchlässig für Gase und Flüssigkeiten sein, damit kein Gas und/oder Öl aus dem Trägergestein in andere Abschnitte oder bis an die Oberfläche fließen kann. An den zu verpumpenden Zementschlamm werden hohe Anforderungen gestellt. Er soll gut pumpbar sein, d.h. möglichst niedrigviskos, und trotzdem keine Entmischung zeigen. Die Wasserabgabe des Zementschlammes an das poröse Gestein während des Pumpvorganges soll niedrig sein, damit sich an der Bohrlochwand keine dicken Filterkuchen bilden, die den Pumpdruck aufgrund der Ringraumverengung so stark erhöhen würden, dass das poröse Gestein aufbricht. Außerdem würde der Zementschlamm bei zu hoher Wasserabgabe nicht optimal abbinden und für Gas und Öl durchlässig werden. Anderseits muss der sich bildende Zementmantel im Ringraum möglichst schnell eine ausreichende Festigkeit erreichen und beim Abbinden darf keine Schrumpfung auftreten, die zu Fließkanälen für Gas, Öl und Wasser führt. Eine optimale Einstellung der Eigenschaften des Zementschlammes ist nur durch Additive möglich. Die wichtigsten Additive sind Verzögerer, Beschleuniger, Dispergatoren und Wasserverlustreduzierer.

Als wirksame Wasserverlustreduzierer von Zement- und Gipsschlämmen werden die verschiedensten Polymere, Mischpolymere und Kombinationen davon in der Praxis eingesetzt. Die ersten wirksamen Produkte, die auch heute noch eingesetzt werden, waren Zelluloseether auf Basis von Hydroxyethylzellulose und Carboxymethylhydroxyethylzellulose. Diese verlieren aufgrund thermischer Instabilität bei Bohrlochtemperaturen über 100 °C (212 °F) Ihre Effizienz. Steigt die Temperatur auf ca. 120 °C bis 150 °C beginnt die thermische Zersetzung dieser biogenen Stoffe. In Folge wurde viele verschiedene vollsynthetische temperaturstabilisierte Polymere entwickelt und sind heute noch bei den unterschiedlichen Temperaturen und Salinitäten des Zementschlammes im Einsatz.

Polymere als Zusatzmittel zur Reduzierung des Wasserverlustes von Zementschlämmen sind in der Literatur wohlbekannt, wobei bei vielen eine sehr eingeschränkte Aktivität im Temperaturbereich zwischen 30 °C (86 °F) und 200 °C (392 °F) vorliegt.

US-2614998 beschreibt die Verwendung von teilweise hydrolysiertem Polyacrylamid (Poly-Acrylamid-co-Acrylsäure) als wasserverlustreduzierendes Polymer. Diese Polymere können allerdings zu starken Verzögerungen auf die Abbindezeit des Zements führen und zeigen nur geringe Wirksamkeit bei hohen Temperaturen.

In US-2865876, US-2905565 und US-3052628 ist die Verwendung sulfonierter Polymere als Additive beschrieben. Die dort beschriebenen Polymere und Copolymere unterscheiden sich in der Zusammensetzung deutlich von dem erfindungsgemäßen Copolymeren und haben keinerlei technische Bedeutung erlangt.

US-5472051 beschreibt Copolymere aus Acryloyldimethyltaurat und Acrylsäure mit Molekulargewichten kleiner als 5000 g/mol. Diese Polymere können allerdings zu starken Verzögerungen auf die Abbindezeit des Zements führen und zeigen aufgrund des Molekulargewichts hohe Wasserverluste bei hohen Temperaturen.

WO-99026991 und EP-1045869 lehren Copolymere aus Acryloyldimethyltaurat und Acrylamid, allerdings zeigen diese Polymere im direkten Vergleich zu den erfindungsgemäßen Copolymeren schlechtere anwendungstechnische Eigenschaften unterhalb einer Temperatur von 50 °C (122 °F) (Vergleichsbeispiel 1).

US-4015991 beschreibt ein Polymer hergestellt durch Polymerisation von Acryloyldimethyltaurat und Acrylamid in Wasser, wobei mindestens 20 % der Acrylamideinheiten zu Acrylsäure oder einem Salz der Acrylsäure nachträglich verseift werden muss. Das beschriebene Copolymer in den Beispielen von US-4015991 ist entstanden durch die Polymerisation von 116,4 g (0,56 mol) Acryloyldimethyltaurat und 14,7 g (0,207 mol) Acrylamid in Wasser. Nachdem mindestens 20 % der Acrylamideinheiten zu Acrylsäure hydrolisiert wurden beansprucht US-4015991 das folgende Copolymer:

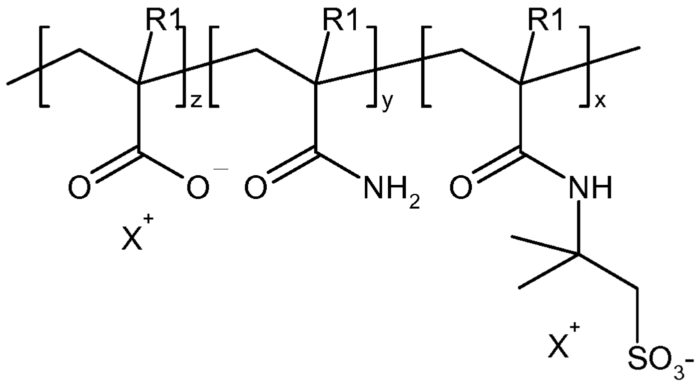

wobei

- x 73,8 mol-%
- y max. 21,8 mol-%
- z in Abhängigkeit von y mindestens 4,4 mol-%

ist.

Der Nachteil dieses Polymere ist allerdings ein unerwünschter Einfluss auf die Zementeigenschaften (Reduzierung der Zementstein-Festigkeit) und die verzögernde Wirkung auf die Verfestigung des Zements. Ein weiteres Problem ist der eingeschränkte Temperaturbereich für die Anwendung als wasserverlustreduzierendes Polymer. Bei 176,7 °C (350 °F) ist es nachweislich (Vergleichsbeispiele 5 und 6) nicht aktiv. In US-4015991 wurde gezeigt, dass durch wässrige Polymerisation von Acryloyldimethyltaurat und Acrylamid ohne Verseifungsschritt kein anwendungstechnisch geeignetes Copolymer hergestellt werden kann.

EP-0116671 offenbart die Einführung von 5 - 60 Gew-% von Vinylamiden (z. B. N-Vinyl-Methyl-acetamid) in Acryloyldimethyltaurat-haltigen Polymeren. Dadurch konnte der Hochtemperaturbereich der Anwendung wesentlich erweitert werden. Allerdings zeigen diese Polymere schlechtere anwendungstechnische Eigenschaften bei Temperaturen unterhalb einer Temperatur von 50 °C (122 °F).

US-5025040 beschreibt Copolymere aus Acryloyldimethyltaurat, Acrylamid und mindestens 20 % N-Vinylimidazol.

US-4931489 offenbart Copolymere aus substituierten Acrylamiden und N-Vinylimidazolen, ohne die Verwendung von Acryloyldimethyltaurat.

EP-0217608, US-4555269 und EP-0157055 beschreiben ein Copolymer aus Acryloyldimethyltaurat und Dimethylacrylamid im molaren Verhältnis von 1:4 bis 4:1 als Fluid Loss Additiv für salzhaltige (ungefähr 10 Gew.-%) Zementschlämme und die Verwendung von Acryloyldimethyltaurat und Acrylsäure im molaren Verhältnis von 1:4 bis 4:1 für den gleichen Zweck.

Polymere auf Basis von Acryloyldimethyltaurat oder ihrer Salze sind bereits bekannt.

Eine anwendungstechnische befriedigende Lösung für einen Temperaturbereich zwischen 30 °C (86 °F) und 200 °C (392 °F) auf Grundlage der in US-4015991 offenbarten Monomeren wurde bislang nicht beschrieben.

Polymere auf Basis von Acryloyldimethyltaurat, Acrylsäure und Acrylamid sind ebenfalls bekannt:
In EP-0244981 werden Polymere auf Basis von Acryloyldimethyltaurat, Acrylsäure und Acrylamid als schmutzabweisende Versiegelungsformulierung offenbart. Diese Polymere werden durch die radikalische Polymerisation der Monomere im wässrigen Medium hergestellt. Hergestellte Polymere nach den Beispielen 1 - 8 in EP-0244981 bewirken aufgrund Ihrer Polymerarchitektur nachweislich (Vergleichsbeispiel 2, 3 und 4) keine Reduzierung des Wasserverlustes wenn sie als Additiv in Zementschlämmen eingesetzt werden.

Polymere auf Basis von Sulfonaten und Acrylamid finden nach US-4800071 Anwendung als Filtrationshilfsmittel um schwerlösliche Calciumsalze aus wässrigen Phosphorsäure-Lösungen zu entfernen. Eine Verwendung dieser Polymere als Wasserverlustreduzierer in Zementschlämmen zur Zementation von Tiefbohrungen ist nicht offenbart.

In US-4342653 werden Polymere auf Basis von Acryloyldimethyltaurat und Acrylamid offenbart. Diese Polymere werden als Fällungshilfsmittel für wässrige Dispersionen verwendet. Die beschriebenen Fällungshilfsmittel sollten zwischen 1 und 35 mol-% wiederkehrende Einheiten von Acryloyldimethyltaurat aufweisen, und eine Brookfield Viskosität von mindestens $2 \cdot 10^{-3}$ Pa·s. Das in US-4342653 aufgezeigte Beispiel weist einen Acrylamidanteil von 94 mol-% aus. Ein solch hoher molarer Acrylamidanteil führt zu keiner Reduzierung des Wasserverlustes in Zementschlämmen.

In JP-11310751 werden Polymere auf Basis von 10 - 90 mol-% Acryloyldimethyltaurat, 0 - 90 mol-% Acrylamide und 0 - 30 mol-% weiteren copolymerisierbaren Monomeren beschrieben, die geeignet sind für Papierbeschichtungen,

Klebstoffe und emulsionsbasierende Klebstoffe. Diese Polymere werden durch die radikalische Polymerisation der Monomere im wässrigen Medium hergestellt. Nach dem Verfahren in JP-11310751 hergestellte Polymere bewirken aufgrund Ihrer Polymerarchitektur keine Reduzierung des Wasserverlustes wenn Sie als Additiv in Zementschlämmen eingesetzt werden.

In JP-63060240 werden Polymere auf Basis von Acryloyldimethyltaurat, Acrylamiden und Natriumacrylat offenbart, die als Fällungsmittel in Gold-Suspensionen oder Gelen zur Gold-Separation verwendet werden. Das genannte Polymer in dem Beispiel enthält 13,3 mol-% AMPS, 13,3 mol-% Natriumacrylat und 73,4 mol-% Acrylamid und wurde mit Hilfe einer wässrigen radikalischen Polymerisation hergestellt. Der Nachteil dieser Polymere ist allerdings ein unerwünschter Einfluss auf die Zementeigenschaften (Reduzierung der Zementstein-Festigkeit) und die verzögernde Wirkung auf die Verfestigung des Zements. Auch zeigt das Polymer als Additive in Zementschlämmen keine Effekte, die zur Reduzierung des Wasserverlustes in Zementschlämmen beitragen.

Als Additive als Wasserverlustreduzierer in Zementschlämmen zur Zementation von Tiefbohrungen werden im Markt Acryloyldimethyltaurat und deren Copolymere (z. B. HOSTAMER® 4707 von Clariant) verwendet. Diese haben jedoch wiederum den Nachteil, dass sie unterhalb einer Temperatur von 180 °C (356 °F) zu einer Erhöhung des Wasserverlustes führen.

Die Vielzahl der entwickelten Polymere zur Reduzierung der Wasserabgabe macht deutlich, dass es stets problematisch ist, einen anwendungstechnisch optimalen Zementschlamm für einen Temperaturbereich zwischen 30 °C (86 °F) und 200 °C (392 °F) zu formulieren. Einen wesentlichen Einfluss auf dessen Eignung übt dabei die Temperatur des Bohrlochabschnittes aus, der zur Zementation vorbereitet wird. Die auf unterschiedliche Temperaturen abgestimmten Polymere stellen große logistische Probleme dar, weil stets ein bestimmter Vorrat an mehreren wasserverlustreduzierenden Polymeren an weltweit verstreuten Orten vorgehalten werden muss.

Die Aufgabe der vorliegenden Erfindung war es daher, Substanzen bereitzustellen, mit deren Hilfe eine verbesserte Flüssigkeitsverlustkontrolle in den Zementschlämmen zur Zementation von Tiefbohrungen bei Temperaturen zwischen 80°F und 300°F erreicht werden kann.

Überraschenderweise wurde nun gefunden, dass die geforderten anwendungstechnischen Eigenschaften durch die Copolymerisation von Acryl-, Methacryl- oder Ethacrylamidoalkylsulfonsäure oder deren Salzen und mit Carboxyalkylacrylat, -methacrylat oder -ethacrylat oder Oligomeren dieser Carboxy-Verbindungen, und mit Acrylamide oder Alkylacrylamide erreicht werden können, wenn das Polymerisationsverfahren geändert und auf die nachträgliche Verseifung verzichtet wird und somit ein neues, bislang nicht beschriebenes Polymer hergestellt wird. Dieses Polymer hat außerdem unterhalb von 50 °C keine abbinde-verzögernden Eigenschaften.

Gegenstand der vorliegenden Erfindung sind wasserlösliche oder wasserquellbare Polymere mit einem k-Wert von 100 bis 300, gemessen in 0,5 Gew.-% Lösung in destilliertem Wasser, enthaltend

a) 25 - 35 mol-% einer oder mehrerer wiederkehrender Struktureinheiten der Formel (1)

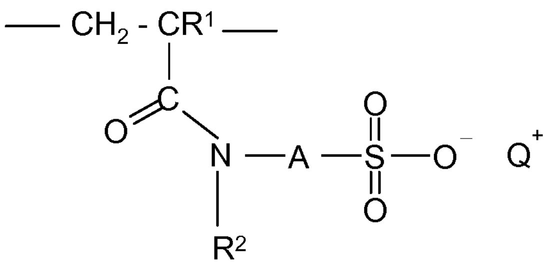

(1)

worin

| | |
|---|---|
| $R^1$, $R^2$ | Wasserstoff, Methyl oder Ethyl, |
| A | lineares oder verzweigtes $C_1$-$C_{12}$-Alkylen bedeuten, und |
| $Q^+$ | für $H^+$, $NH_4^+$, $Li^+$, $Na^+$, $K^+$, ½ $Ca^{++}$, ½ $Mg^{++}$, ½ $Zn^{++}$, 1/3 $Al^{+++}$, organische Ammoniumionen der Formel $[HNR^5R^6R^7]^+$, wobei $R^5$, $R^6$ und $R^7$ unabhängig voneinander Wasserstoff, eine lineare oder verzweigte Alkylgruppe mit 1 bis 22 Kohlenstoffatomen, eine lineare oder verzweigte, einfach oder mehrfach ungesättigte Alkenylgruppe mit 2 bis 22 Kohlenstoffatomen, eine $C_6$-$C_{22}$-Alkylamidopropylgruppe, eine lineare Mono-Hydroxyalkylgruppe mit 2 bis 10 Kohlenstoffatomen oder eine lineare oder verzweigte Di-Hydroxyalkylgruppe mit 3 bis 10 Kohlenstoffatomen sein können, und wobei mindestens einer der Reste $R^5$, $R^6$ und $R^7$ nicht Wasserstoff ist, oder für Mischungen aus diesen Ionen, steht, |

b) 3 bis 8 mol-% einer oder mehrerer wiederkehrender Struktureinheiten der Formel (2)

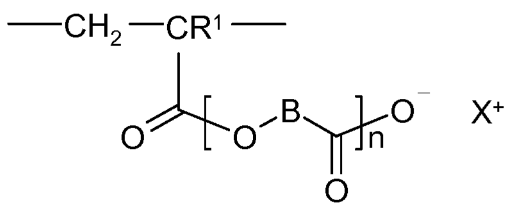

(2)

worin

$R^1$ Wasserstoff, Methyl oder Ethyl bedeutet,
$X^+$ für $H^+$, $NH_4^+$, $Li^+$, $Na^+$, $K^+$, ½ $Ca^{++}$, ½ $Mg^{++}$, ½ $Zn^{++}$, 1/3 $Al^{+++}$, organische Ammoniumionen der Formel $[HNR^5R^6R^7]^+$, wobei $R^5$, $R^6$ und $R^7$ unabhängig voneinander Wasserstoff, eine lineare oder verzweigte Alkylgruppe mit 1 bis 22 Kohlenstoffatomen, eine lineare oder verzweigte, einfach oder mehrfach ungesättigte Alkenylgruppe mit 2 bis 22 Kohlenstoffatomen, eine $C_6$-$C_{22}$-Alkylamidopropylgruppe, eine lineare Mono-Hydroxyalkylgruppe mit 2 bis 10 Kohlenstoffatomen oder eine lineare oder verzweigte Di-Hydroxyalkylgruppe mit 3 bis 10 Kohlenstoffatomen sein können, und wobei mindestens einer der Reste $R^5$, $R^6$ und $R^7$ nicht Wasserstoff ist, oder für Mischungen aus diesen Ionen, steht,
B eine chemische Bindung, oder eine lineare oder verzweigte Alkylengruppe mit 1 bis 6 Kohlenstoffatomen ist, und
n eine ganze Zahl von 0 bis 5 ist,

und

c) 57 bis 72 mol-% einer oder mehrerer wiederkehrender Struktureinheiten der Formel (3)

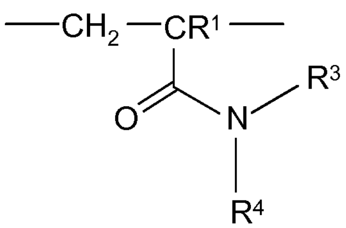

(3)

worin

$R^1$ Wasserstoff, Methyl oder Ethyl, und
$R^3$ und $R^4$ unabhängig voneinander Wasserstoff, Methyl, Ethyl, n-Propyl, iso-Propyl oder Butyl bedeuten.

Ein weiterer Gegenstand der Erfindung ist die Verwendung der erfindungsgemäßen Polymere als Wasserverlustreduzierer für Zementformulierungen. Vorzugsweise werden in Zementformulierungen 0,05 bis 5 Gew.-% der Polymere, bezogen auf das Gewicht von Zementformulierung, eingesetzt.

In einem erfindungsgemäßen Polymer können jeweils verschiedene Struktureinheiten der Formel (1) und/oder der Formel (2) und/oder der Formel (3) enthalten sein. Ein erfindungsgemäßes Polymer kann beispielsweise mehrere Struktureinheiten der Formel (1) enthalten, die sich durch unterschiedliche Gegenionen $Q^+$ voneinander unterscheiden. Ein erfindungsgemäßes Polymer kann beispielsweise auch mehrere Struktureinheiten der Formel (2) enthalten, die sich durch unterschiedliche Gegenionen $X^+$ voneinander unterscheiden. Ein erfindungsgemäßes Polymer kann beispielsweise auch mehrere Struktureinheiten der Formel (3) enthalten, die sich durch unterschiedliche Reste $R^1$, $R^3$ und $R^4$ unterscheiden. Die Reste $R^1$ in den Struktureinheiten der Formeln (1), (2) und (3) können in allen Struktureinheiten identisch oder verschieden sein.

Die gewichtsmittleren Molekulargewichte dieser Polymere betragen vorzugsweise 300.000 bis 5.000.000, bevorzugt 500.000 bis 4.000.000, insbesondere 600.000 bis 2.500.000 g/mol. Die gewichtsmittleren Molekulargewichte können mit Hilfe der Gel Permeation Chromatographie (GPC) ermittelt werden. Die Verfahrensweise zur Bestimmung des gewichtsmittleren Molekulargewichtes mit Hilfe der GPC ist in "Makromolekulare Chemie: Eine Einführung" von Bernd Tieke, Wiley-VCH, 2. vollständig überarbeitete und erweiterte Auflage (9. September 2005) ISBN-10: 3527313796 ausführlich in Kapitel 3 beschrieben. Die Polymere wurden gegen einen Polystyrolsulfonat Standard gemessen.

Als Indikator für das Molekulargewicht dienen die relative Viskosität bzw. der k-Wert. Zur Bestimmung des k-Wertes wird das Copolymer in einer Konzentration von (0,5 Gew.-%) in destilliertem Wasser gelöst und mittels Ubbelohde Viskosimeter die Ausflusszeit bei 20 °C ermittelt. Dieser Wert ergibt die absolute Viskosität der Lösung ($\eta_c$). Die absolute Viskosität des Lösemittels ist ($\eta_0$). Das Verhältnis beider absoluten Viskositäten ergibt die relative Viskosität:

$$Z = \frac{n_c}{n_0}$$

Aus der relativen Viskosität Z und der Konzentration C kann der k-Wert mittels der folgenden Gleichung ermittelt werden:

$$Lg\ z = \left(\frac{75 * k^2}{1 + 1{,}5kc} + k\right) * c$$

Der k-Wert der erfindungsgemäßen Polymere beträgt von 100 bis 300, vorzugsweise von 150 bis 270 und insbesondere bevorzugt von 180 bis 250. In den Struktureinheiten der Formel (1) ist $R^1$ vorzugsweise Wasserstoff oder Methyl und besonders bevorzugt Wasserstoff.

In den Struktureinheiten der Formel (1) ist A vorzugsweise eine Struktureinheit der Formel $-C(CH_3)_2-CH_2-$.

Die Struktureinheiten der Formel (1) sind vorzugsweise abgeleitet von Monomeren aus der Gruppe bestehend aus Acryloyldimethyltaurat, Acryloyl-1,1-dimethyl-2methyltaurat, Acryloyltaurat, Acryloyl-N-methyltaurat vorzugsweise Acryloyldimethyltaurat.

Vorzugsweise ist der Neutralisationsgrad der Struktureinheiten der Formel (1) von 50,0 bis 100 mol-%, besonders bevorzugt von 80,0 bis 100 mol-%, insbesondere bevorzugt von 90,0 bis 100 mol-% und außerordentlich bevorzugt von 95,0 bis 100 mol-%.

In den Struktureinheiten der Formel (1) ist Q teilweise gleich $H^+$, sofern keine vollständige Neutralisation vorliegt. $Q^+$ ist bei teilweiser oder vollständiger Neutralisation vorzugsweise ausgewählt aus $NH_4^+$, $Ca^{2+}$ und $Na^+$ und Mischungen aus diesen Ionen. Besonders bevorzugt ist das von $H^+$ verschiedene Gegenion Q $NH_4^+$.

In den Struktureinheiten der Formel (2) ist $R^1$ vorzugsweise Wasserstoff oder Methyl und besonders bevorzugt Wasserstoff.

In den Struktureinheiten der Formeln (2) ist B vorzugsweise eine chemische Bindung oder eine Struktureinheit der Formel $-CH_2-CH_2-$.

In den Struktureinheiten der Formel (2) ist n vorzugsweise 0 bis 5 und besonders bevorzugt 0 bis 3 und insbesondere bevorzugt 0 oder 1.

Vorzugsweise ist der Anteil an Struktureinheiten der Formel (2), worin n gleich 0 ist, innerhalb der Komponente b) der erfindungsgemäßen Polymere mindestens 70,0 mol-%, besonders bevorzugt mindestens 80,0 mol-%, insbesondere bevorzugt mindestens 90,0 mol-%, außerordentlich bevorzugt mindestens 95,0 mol-%.

Besonders bevorzugt ist in den Struktureinheiten der Formel (2) B eine chemische Bindung oder die Gruppe $-CH_2CH_2-$.

In einer weiteren bevorzugten Ausführungsform ist in den Struktureinheiten der Formel (2) B eine chemische Bindung oder die Gruppe $-CH_2CH_2-$ und n eine ganze Zahl von 1 bis 5, und vorzugsweise von 1 bis 3 und besonders bevorzugt 1.

In den Struktureinheiten der Formel (2) ist X teilweise gleich $H^+$, sofern keine vollständige Neutralisation vorliegt. X ist bei teilweiser oder vollständiger Neutralisation vorzugsweise ausgewählt aus $NH_4^+$, $Ca^{2+}$ und $Na^+$ und Mischungen aus diesen Ionen. Besonders bevorzugt ist das von $H^+$ verschiedene Gegenion X $NH_4^+$.

In einer weiteren besonders bevorzugten Ausführungsform der Erfindung steht $X^+$ für $H^+$.

In einer weiteren besonders bevorzugten Ausführungsform der Erfindung enthalten die erfindungsgemäßen Polymere mehrere verschiedene Struktureinheiten der Formel (2), wobei in einigen Struktureinheiten der Formel (2) die Bedeutung der Gegenionen $X^+$ $H^+$ ist und in den anderen Struktureinheiten der Formel (2) die Bedeutung der Gegenionen $X^+$ eine andere als $H^+$, und vorzugsweise $NH_4^+$ ist.

In einer weiteren besonders bevorzugten Ausführungsform der Erfindung enthalten die erfindungsgemäßen Polymere mehrere verschiedene Struktureinheiten der Formel (2), die sich in $R^1$, b und/oder n unterscheiden. Diese Struktureinheiten sind vorzugsweise abgeleitet von Monomeren aus der Gruppe bestehend aus Methacrylsäure, Acrylsäure, Carboxyethylacrylat und höheren Oligomeren der Formel (2), worin n eine ganze Zahl von 2 oder mehr ist. Insbesondere bevorzugt sind die Struktureinheiten abgeleitet von Methacrylsäure, Acrylsäure und Carboxyethylacrylat. Besonders bevorzugt sind Methacrylsäure und Acrylsäure.

Die Struktureinheiten der Formel (3) sind vorzugsweise abgeleitet von Monomeren aus der Gruppe bestehend aus Acrylamid, N-Methylacrylamid, N-Ethylacrylamid, N,N-Diethylmethacrylamid, N,N-Diethylacrylamid, N,N-Dimethylmethacrylamid, N,N-Dimethylacrylamid, N-Isopropylacrylamid, N-tert.-Butylacrylamid und N-Butylacrylamid, vorzugsweise Acrylamid, Methacrylamid, N,N-Diethylacrylamid, N,N-Dimethylacrylamid, Isopropylacrylamid, besonders bevorzugt Acrylamid, Methacrylamid, N,N-Dimethylacrylamid, insbesondere bevorzugt Acrylamid.

In einer weiteren Ausführungsform der Erfindung enthalten die erfindungsgemäßen Polymere vorzugsweise

a) 27,5 bis 32,5 mol-% Struktureinheiten der Formel (1),

b) 4,5 bis 7,5 mol-% Struktureinheiten der Formel (2), und

c) 60 bis 68 mol-% Struktureinheiten der Formel (3).

In einer weiteren bevorzugten Ausführungsform der Erfindung sind die Struktureinheiten der Formel (1) abgeleitet von Acryloyldimethyltaurat, diejenigen der Formel (2) abgeleitet von Acrylsäure und diejenigen der Formel (3) abgeleitet von Acrylamid.

Besonders bevorzugte erfindungsgemäße Polymere enthalten Struktureinheiten von

a) 25 bis 35 mol-% Acryloyldimethyltaurat, und
b) 3 bis 8 mol-% Acrylsäure, und
c) 57 bis 72 mol-% Acrylamid.

Eine weiteren Ausführungsform besonders bevorzugter erfindungsgemäße Polymere enthält Struktureinheiten von

a) 27,5 bis 32,5 mol-% Acryloyldimethyltaurat, und
b) 4,5 bis 7,5 mol-% Acrylsäure, und
c) 60 bis 68 mol-% Acrylamid.

In einer weiteren bevorzugten Ausführungsform der Erfindung enthalten die erfindungsgemäßen Polymere keine kationischen Struktureinheiten.

Die Verteilung der verschiedenen Struktureinheiten in den erfindungsgemäßen Polymeren kann statistisch, blockartig, alternierend oder gradientenartig sein. Die Herstellung der erfindungsgemäßen Polymere erfolgt im Allgemeinen durch radikalische Polymerisation.

Radikalische Polymerisationen sind dem Fachmann allgemein bekannt und in Standardwerken der Literatur, z. B. in "Makromolekulare Chemie: Eine Einführung" von Bernd Tieke, Wiley-VCH, 2. vollständig überarbeitete und erweiterte Auflage (9. September 2005) ISBN-10: 3527313796 ausführlich beschrieben.

Die Herstellung der erfindungsgemäßen Polymere erfolgt vorzugsweise mittels radikalischer Fällungspolymerisation in einem polaren Lösemittel oder Lösemittelgemisch. Hierbei werden die entsprechenden Monomere z. B. in dem polaren Lösemittel oder Lösemittelgemisch gelöst oder dispergiert und die Polymerisation in an sich bekannter Weise, z. B. durch Zugabe einer radikalbildenden Verbindung, gestartet. Dabei können beispielsweise die vorgelegten Monomere "direkt" polymerisiert werden. Sie können aber auch vor der Polymerisation neutralisiert werden, indem beispielsweise saure Gruppen eingesetzter Monomere vor der Polymerisation mit Basen ungesetzt werden, wobei die Gegenionen $Q^+$ der Struktureinheiten gemäß Formel (1) oder $X^+$ der Struktureinheiten gemäß Formel (2) ausgebildet werden. Anstelle der Neutralisation der Monomere vor der Polymerisation können jedoch auch die Polymere nach der erfolgten Polymerisation mit den Basen neutralisiert werden.

Weiterer Gegenstand der vorliegenden Erfindung ist daher ein Verfahren zur Herstellung der erfindungsgemäßen Polymere, wobei Monomere, aus denen sich die Struktureinheiten der Komponenten a) bis c) ableiten, in einem polaren Lösemittel oder solche enthaltenden Lösemittelgemischen, radikalisch polymerisiert werden, und gegebenenfalls die Monomere vor der Polymerisation oder das Polymer nach der Polymerisation mit Ammoniak oder organischen Aminen oder einer $Li^+$-, $Na^+$-, $K^+$-, $Ca^{++}$-, $Mg^{++}$-, $Zn^{++}$- oder $Al^{+++}$-enthaltenden Base, vorzugsweise mit den entsprechenden Hydroxiden oder Carbonaten und besonders bevorzugt mit Hydroxiden, neutralisiert werden.

Als Polymerisationsinitiatoren kommen alle radikalbildenden Substanzen in Frage, neben typischen Diazoverbindungen und Peroxyverbindungen ist auch eine Initiierung durch Redoxstarter, einen Photoinitiator oder durch energiereiche Strahlung (UV, Neutronen, Plasma) möglich. Im Gegensatz zur wässrigen, radikalischen Polymerisation findet man nur eine untergeordnete Abhängigkeit des Produktes von der Art und Menge des verwendeten Initiatorsystems.

In einer bevorzugten Ausführungsform des Verfahrens zur Herstellung der erfindungsgemäßen Polymere erfolgt die radikalischer Fällungspolymerisation in einem polaren Lösemittel oder Lösemittelgemisch, dass dadurch gekennzeichnet ist, dass das Lösemittel oder Lösemittelgemisch einen Siedepunkt von 60 bis 110 °C, vorzugsweise von 60 bis 85 °C, besonders bevorzugt von 70 bis 85 °C aufweist.

In einer weiteren bevorzugten Ausführungsform des Verfahrens zur Herstellung der erfindungsgemäßen Polymere enthält das polare Lösemittel:

d) Wasser
und
e) ein oder mehrere weitere polare Lösemittel, vorzugsweise Alkohole, Dialkylketon und cyclische Ether, besonders bevorzugt Alkohole, Dialkylketon und insbesondere bevorzugt Alkohole.

In einer weiteren bevorzugten Ausführungsform des Verfahrens zur Herstellung der erfindungsgemäßen Polymere enthält die Komponente e) ein oder mehrere polare Lösemittel ausgewählt aus der Gruppe aus Methanol, Ethanol, 1-Propanol, 2-Propanol, 2-Methyl-2-Propanol, , 2-Butano, Dimethylketon, Diethylketon, Tetrahydropyran, Tetrahydrofuran, 2-Methyltetrahydrofuran, 1,3-Dioxan, 1,4-Dioxan vorzugsweise, Ethanol, 1 Propanol, 2 Propanol, 2-Methylpropan-2-ol, , 2-Butanol, Dimethylketon, Tetrahydrofuran, 2-Methyltetrahydrofuran, 1,3-Dioxan, besonders bevorzugt 2 Propanol, 2-Methylpropan-2-ol, Dimethylketon, Tetrahydrofuran, 2 Methyltetrahydrofuran, 1,3-Dioxan ,insbesondere bevorzugt 2-Methylpropan-2-ol, Dimethylketon und außerordentlich bevorzugt 2 Methylpropan-2-ol.

Im Verfahren zur Herstellung der erfindungsgemäßen Polymere können verschiedene polare Losemittel der Komponente e) enthalten sein. Ein erfindungsgemäßes polares Lösemittel der der Komponente e) kann beispielsweise 2 Methylpropan-2-ol enthalten. Ein weiteres erfindungsgemäßes Lösemittel der der Komponente e) kann beispielsweise eine Mischung aus 2 Methylpropan-2-ol und Dimethylketon enthalten. Ein weiteres erfindungsgemäßes Lösemittel der der Komponente e) kann beispielsweise eine Mischung aus 2 Methylpropan-2-ol und Tetrahydrofuran enthalten.

Eine besondere Ausführungsform des Verfahren zur Herstellung eines erfindungsgemäßen Polymers ist dadurch gekennzeichnet, dass das polare Lösemittelgemisch 0,5 bis 20 Gew.-%, vorzugsweise 0,5 bis 10 Gew.-%, besonders bevorzugt 1 bis 8 Gew.-% Wasser und außerordentlich bevorzugt 2 bis 5 Gew.-% Wasser enthält.

Eine weitere besondere Ausführungsform des Verfahrens zur Herstellung eines erfindungsgemäßen Polymers ist dadurch gekennzeichnet, dass das polare Lösemittelgemisch 5 bis 99,5 Gew.-% vorzugsweise 10 bis 99,5 Gew.-% und besonders bevorzugt 30 bis 99,5 Gew.-% 2 Methylpropan-2-ol enthält.

Eine weitere besondere Ausführungsform des Verfahrens zur Herstellung eines erfindungsgemäßen Polymers ist dadurch gekennzeichnet, dass das polare Lösemittelgemisch 0,5 bis 20 Gew.-% Wasser, 7,5 bis 92 Gew.-% 2 Methylpropan-2-ol und 7,5 bis 92 Gew.-% Dimethylketon, vorzugsweise 0,5 bis 7,5 Gew.-% Wasser, 20 bis 89,5 Gew.-% 2 Methylpropan-2-ol und 10 bis 79,5 Gew.-% Dimethylketon enthält.

Ein außerordentlich bevorzugtes Verfahren zur Herstellung erfindungsgemäßen Polymers ist dadurch gekennzeichnet, dass 27,5 bis 32,5 mol-% Acryloyldimethyltaurat, und 4,5 bis 7,5 mol-% Acrylsäure, 60 bis 68 mol-% Acrylamid in einem polaren Lösungsmittelgemisch, vorzugsweise einer Mischung aus 1 bis 8 Gew.-% Wasser und 92 bis 99 Gew.-% 2-Methylpropan-2-ol, radikalisch polymerisiert werden und gegebenenfalls die Monomere vor der Polymerisation oder das Polymer nach der Polymerisation mit Ammoniak, Ammoniumkarbonat, Natriumhydroxid, Natriumkarbonat vorzugsweise mit Ammoniak neutralisiert werden.

Die Polymere fallen als weißer, voluminöser Niederschlag im polaren Lösemittelgemisch an. Zur Isolierung können alle üblichen Verdampfungs-, Trocknungsisolierprozesse verwendet werden. Insbesondere kann das polare Lösemittelgemisch durch eine Druckfiltration oder Destillation vom Produkt abgetrennt werden. Ein geringer Rückstand des polaren Lösemittelgemisches ist weder aus sicherheitstechnischen noch aus anwendungstechnischen Gründen bedenklich.

Ein weiterer Gegenstand der Erfindung ist ein Verfahren zur Zementierung von Tiefenbohrungen unter Verwendung einer Zementschlämme, welche das erfindungsgemäße Polymer in einer Konzentration von 0,01 bis 5 % bwoc (by weight of cement, deutsch: Gewichtsprozent bezogen auf das Gewicht des Zements) vorzugsweise 0,05 bis 0,9 % bwoc enthält. Weitere Komponenten der Zementschlämme sind Wasser unterschiedlicher Salinität und Zement. Außerdem können Dispergatoren, Verzögerer, Beschleuniger, Extender, Schäumer, Entschäumer, Beschwerungsmittel, Dichte reduzierende Additive sowie die Zugfestigkeit verstärkende Fasern oder Silikatderivate als Hilfssadditive verwendet werden.

Ein weiterer Gegenstand der Erfindung ist ein Verfahren zur Zementierung von Tiefenbohrungen unter Verwendung einer Zementschlämme, welche durch eine Mischung aus des erfindungsgemäßen Polymers und Stärke in einer Konzentration von 0,01 bis 5 % bwoc (by weight of cement, deutsch: Gewichtsprozent bezogen auf das Gewicht des Zements) vorzugsweise 0,05 bis 0,9 % bwoc enthält. Weitere Komponenten der Zementschlämme sind Wasser unterschiedlicher Salinität und Zement. Außerdem können Dispergatoren, Verzögerer, Beschleuniger, Extender, Schäumer, Entschäumer, Beschwerungsmittel, Dichte reduzierende Additive sowie die Zugfestigkeit verstärkende Fasern oder Silikatderivate als Hilfssadditive verwendet werden.

Unter dem Begriff Stärke ist eine organische Verbindung zu verstehen. Stärke ist ein Polysaccharid mit der Formel $(C_6H_{10}O_5)_n$, das aus $\alpha$-D-Glucose-Einheiten besteht, die über glykosidische Bindungen miteinander verknüpft sind. Stärke kann bestehen aus:

- 0 bis 100 Gew.-% aus Amylose, linearen Ketten mit helikaler (Schrauben-) Struktur, die nur α-1,4-glykosidisch verknüpft sind und
- 0 bis 100 Gew.-% aus Amylopektin, stark verzweigten Strukturen, mit α-1,6-glykosidischen und α-1,4-glykosidischen Verknüpfungen. Das Amylopektin der Stärke ist allerdings mit etwa einer α-1,6-glykosidischen Bindung nach etwa 30 α-1,4-glykosidischen Verknüpfungen weniger stark verzweigt als das des Glycogens (ca. 1 α-1,6-glykosidische pro 10 α-1,4-glykosidischen Bindungen).

Stärke wird in unseren Breiten meistens aus Kartoffeln oder Getreide gewonnen, aber auch aus zahlreichen anderen Pflanzen, wie Reis (Bruchreis aus den Reisschälfabriken) und Mais. International bedeutsam ist noch Maniok (Tapioka) als Stärke liefernde Pflanze. Bei der industriellen Stärkegewinnung werden je nach Rohstoff verschiedene Technologien eingesetzt.

In einer besonderen Ausführungsform der Erfindung kann die Stärke in einem vorangegangenen Schritt thermisch modifiziert werden. Die Stärke kann unter Hitzeeinwirkung ein Vielfaches ihres Eigengewichtes an Wasser physikalisch binden, aufquellen und verkleistern. Beim Erhitzen mit Wasser quillt die Stärke bei 47 - 57 °C, die Schichten platzen, und bei 55 - 87 °C (Kartoffelstärke bei 62,5 °C, Weizenstärke bei 67,5 °C) entsteht Stärkekleister, welcher je nach der Stärkesorte verschiedenes Steifungsvermögen besitzt. Der Einsatz von natürlicher, nicht vorverkleisterter Stärke hat den Vorteil, dass währende des Verpumpens einer Zementschlämme bei Erhöhung der Temperatur diese Zementschlämme rheologisch stabilisiert wird.

In einer weiteren besonderen Ausführungsform der Erfindung kann die Stärke in einer chemisch modifizierten Form vorliegen. Die Herstellung von modifizierter Stärke erfolgt, je nachdem, welche Eigenschaften verändert werden sollen, mit verschiedenen chemischen Umwandlungsprozessen. Bei einigen modifizierten Stärken werden mehrere Umwandlungsprozesse nacheinander durchgeführt (z. B. acetylierte, oxidierte Stärke). Unter modifizierten Stärken durch chemische Umwandlungsprozesse, sind zu verstehen:

- Säurebehandelte Stärke durch Reaktion mit Säuren (z. B. mit Salzsäure, Phosphorsäure oder Schwefelsäure)
- Alkalisch modifizierte Stärke durch Reaktion mit Laugen (z. B. mit Natronlauge oder Kalilauge)
- Gebleichte Stärke durch Behandlung mit Peroxyessigsäure, Wasserstoffperoxid, Natriumhypochlorit, Natriumchlorit, Schwefeldioxid, Sulfiten, Kaliumpermanganat oder Ammoniumpersulfat
- Enzymatisch modifizierte Stärke durch Behandlung mit Amylasen
- Oxidierte Stärke durch Oxidation (z. B. mit Natriumhypochlorit)
- Monostärkephosphat durch Veresterung mit phosphorigen Estergruppen (z. B. Phosphorsäure, Natrium- oder Kaliumphosphat, Phosphonsäure oder Pentanatriu mtriphosphat)
- Distärkephosphat durch Veresterung mit Natriumtrimetaphosphat oder Phosphoroxychlorid
- Phosphatiertes Distärkephosphat durch Kombination der Verfahren zur Herstellung von Monostärkephosphat und Distärkephosphat
- acetylierte Stärke durch Veresterung (z. B. mit Anhydriden).
- Hydroxypropylstärke durch Reaktion mit Propylenoxid
- Stärkenatriumoctenylsuccinat durch Reaktion von Stärke mit Octenylbernsteinsäureanhydrid.

Am häufigsten werden Verbesserungen der Beständigkeit gegen Hitze, Kälte und/oder pH-Veränderungen (Säuren) angestrebt.

Ein weiterer Gegenstand der Erfindung sind daher Mischungen, enthaltend die oben erwähnte Stärke und/oder deren Modifizierungen, und die erfindungsgemäßen Polymere. Diese Mischungen enthalten vorzugsweise:

25 bis 75 Gew.-% Stärke und
25 bis 75 Gew.-% der erfindungsgemäßen Polymere.

In einer besonderen Ausführungsform enthalten die Mischungen
25 bis 75 Gew.-% einer chemisch modifizierten Stärke und
25 bis 75 Gew.-% der erfindungsgemäßen Polymere.

In einer weiteren besonderen Ausführungsform enthalten die Mischungen
25 bis 75 Gew.-% einer thermisch modifizierten Stärke und
25 bis 75 Gew.-% der erfindungsgemäßen Polymere.

Eine erfindungsgemäße Mischung aus Stärke und den erfindungsgemäßen Polymeren kann während des Polymerisationsverfahrens nach der eigentlichen Polymerisation und vor dem Trocknungsprozess bzw. Isolierungsprozesses erhalten werden.

Eine weitere erfindungsgemäße Mischung aus Stärke und den erfindungsgemäßen Polymere kann durch das Mischen der pulverförmigen Stärke mit dem pulverförmigen erfindungsgemäßen Polymeren erhalten werden.

Beispiele:

In den nachstehend beschriebenen Polymerisationsverfahren A bis B werden typische Herstellverfahren für die erfindungsgemäßen Polymere beschrieben.

In den Beispielen wurde das verwendete polare Lösemittel variiert, mit deren Hilfe die erfindungsgemäßen Polymere hergestellt werden können. Mit Hilfe der Polymerisationsmethoden A1 bis A5 und B1 bis B3 wurden weitere erfindungsgemäße Polymere durch die Variation der Monomere herstellt. Diese Polymere und für deren Synthese verwendeten Polymerisationsverfahren werden in der Tabelle 1a) bis Tabelle 1i) zusammengefasst.

Polymerisationsverfahren A1: Polymerisation in 2-Methylpropan-2-ol / Wasser (3,5 %) als polares Lösemittel

In einem 2 Liter Quickfitkolben mit Ankerrührer, Rückflusskühler mit Abgaswäscher, kombiniertes Thermometer/pH-Meter und einem Gaseinleitungsrohr werden 772 g wasserfreies 2-Methylpropan-2-ol mit 28 g destillierten Wasser versetzt. Das Reaktionsgefäß befindet sich in einem Heizbadthermostaten.

Dieses Reaktionsgefäß wird mit Stickstoffgas überschichtet und im leichten Stickstoffgegenstrom 113,2 g Acryloyldimethyltaurat eingetragen. Das Acryloyldimethyltaurat löst sich im 2-Methylpropan-2-ol / Wasser Gemisch nicht vollständig auf und liegt teilweise als Feststoffdispersion vor. Der pH-Wert dieses Gemisches liegt unterhalb von pH 1. Durch das Gaseinleitungsrohr wird oberhalb der flüssigen Phase gasförmiges Ammoniak eingeleitet bis der pH-Wert der Dispersion zwischen 7 und 8 liegt. Nach Erreichen des gewünschten pH-Bereichs wird noch 1 Stunde nachgerührt und der pH-Wert kontinuierlich erfasst. Das Reaktionsgefäß wird mit Stickstoff überschichtet und es werden 79,2 g Acrylamid und 7,6 g Acrylsäure eingetragen. Nach Eintrag des Acrylamids wird erneut der pH-Wert kontrolliert und gegebenenfalls in den Bereich pH 7 bis 8 korrigiert. Es wird mindestens 1 Stunde ein konstanter Stickstoffstrom durch die Lösung geleitet. Nach dieser Inertisierungszeit wird der Restsauerstoff durch eine Sauerstoffelektrode überprüft. Sollte der gemessene Wert an Restsauerstoff in der flüssigen Phase den Wert 1ppm übersteigen, muss erneut inertisiert werden, bis dieser Wert erreicht wird. Danach werden im leichten Stickstoffstrom 2 g 2,2'-Azobis(2,4-dimethylvaleronitril) zugegeben und der Reaktionskessel auf 40 °C erwärmt. Kurz nach Erreichen einer Innentemperatur von 40 °C wird das Einleiten von Stickstoffgas beendet und ein Start der Polymerisationsreaktion beobachtet, was durch eine Temperaturerhöhung von 10 - 35 °C festgestellt werden kann. Ungefähr 5 - 15 Minuten nach Einsetzen der Polymerisationsreaktion ist das Temperaturmaximum überschritten und die Temperatur im Reaktionsgefäß wird durch das Heizbad bis zum Siedepunkt des 2-Methylpropan-2-ol / Wasser Gemisches erhöht. Unter leichten Rückfluss wird die nun viskose Masse zwei Stunden nachgerührt. Das Reaktionsprodukt, welches als Viskose Suspension von Polymer im 2-Methylpropan-2-ol / Wasser Gemisch vorliegt, wird durch abfiltrieren und anschließender Trocknung im Vakuumtrockenschrank abgetrennt.

Ausbeute: 215,4 g Polymer 1

| | |
|---|---|
| Trockengehalt (IR-Trockner 15 Minuten bei 120 °C): | 94 % |
| K-Wert (0,5 %ige Lösung in destilliertem Wasser): | 212 |
| pH-Wert (0,5 %ige Lösung in destilliertem Wasser): | 4,76 |

Polymerisationsverfahren A2: Polymerisation in 2-Methylpropan-2-ol / Wasser (2 %)

In einem 2 Liter Quickfitkolben mit Ankerrührer, Rückflusskühler mit Abgaswäscher, kombiniertes Thermometer/pH-Meter und einem Gaseinleitungsrohr werden 784 g wasserfreies 2-Methylpropan-2-ol mit 16 g destillierten Wasser versetzt. Das Reaktionsgefäß befindet sich in einem Heizbadthermostaten. Die weiteren Schritte des Polymerisationsverfahrens A2 werden analog zu Polymerisationsverfahren A1 durchgeführt.

Mit Hilfe der Polymerisationsmethode A2 wurden weitere erfindungsgemäße Polymere durch die Variation der Monomere herstellt. Diese Polymere werden in der Tabelle 1 zusammengefasst.

Polymerisationsverfahren A3: Polymerisation in 2-Methylpropan-2-ol / Wasser (4,5 %)

In einem 2 Liter Quickfitkolben mit Ankerrührer, Rückflusskühler mit Abgaswäscher, kombiniertes Thermometer/pH-Meter und einem Gaseinleitungsrohr werden 764 g wasserfreies 2-Methylpropan-2-ol mit 36 g destillierten Wasser

versetzt. Das Reaktionsgefäß befindet sich in einem Heizbadthermostaten. Die weiteren Schritte des Polymerisationsverfahrens A3 werden analog zu Polymerisationsverfahren A1 durchgeführt.

Polymerisationsverfahren A4: Polymerisation in 2-Methylpropan-2-ol / Wasser (1,5 %)

In einem 2 Liter Quickfitkolben mit Ankerrührer, Rückflusskühler mit Abgaswäscher, kombiniertes Thermometer/pH-Meter und einem Gaseinleitungsrohr werden 788 g wasserfreies 2-Methylpropan-2-ol mit 12 g destillierten Wasser versetzt. Das Reaktionsgefäß befindet sich in einem Heizbadthermostaten. Die weiteren Schritte des Polymerisationsverfahrens A4 werden analog zu Polymerisationsverfahren A1 durchgeführt.

Polymerisationsverfahren A5: Polymerisation in 2-Methylpropan-2-ol / Wasser (7,5 %)

In einem 2 Liter Quickfitkolben mit Ankerrührer, Rückflusskühler mit Abgaswäscher, kombiniertes Thermometer/pH-Meter und einem Gaseinleitungsrohr werden 748 g wasserfreies 2-Methylpropan-2-ol mit 52 g destilliertem Wasser versetzt. Das Reaktionsgefäß befindet sich in einem Heizbadthermostaten. Die weiteren Schritte des Polymerisationsverfahrens A5 werden analog zu Polymerisationsverfahren A1 durchgeführt.

Polymerisationsverfahren B1: Polymerisation in 2-Methylpropan-2-ol, Dimethylketon und Wasser als polares Lösemittel (50:50, 3,4 % Wasser)

In einem 2 Liter Quickfitkolben mit Ankerrührer, Rückflusskühler mit Abgaswäscher, kombiniertes Thermometer/pH-Meter und einem Gaseinleitungsrohr werden 384 g wasserfreies 2-Methylpropan-2-ol und 384 g Dimethylketon werden mit 26,4 g destillierten Wasser versetzt. Das Reaktionsgefäß befindet sich in einem Heizbadthermostaten.

Dieses Reaktionsgefäß wird mit Stickstoffgas überschichtet und im leichten Stickstoffgegenstrom 130 g Acryloyldimethyltaurat eingetragen. Das Acryloyldimethyltaurat löst sich im 2-Methylpropan-2-ol /Dimethylketon / Wasser Gemisch nicht vollständig auf und liegt teilweise als Feststoffdispersion vor. Der pH-Wert dieses Gemisches liegt unterhalb von pH 1. Durch das Gaseinleitungsrohr wird oberhalb der flüssigen Phase gasförmiges Ammoniak eingeleitet bis der pH-Wert der Dispersion zwischen 7 und 8 liegt. Nach Erreichen des gewünschten pH-Bereichs wird noch 1 Stunde nachgerührt und der pH-Wert kontinuierlich erfasst. Das Reaktionsgefäß wird mit Stickstoff überschichtet und es werden 60 g Acrylamid und 10 g Acrylsäure eingetragen. Nach Eintrag des Acrylamids wird erneut der pH-Wert kontrolliert und gegebenenfalls in den Bereich pH 7bis 8 korrigiert. Es wird mindestens 1 Stunde ein konstanter Stickstoffstrom durch die Lösung geleitet. Nach dieser Inertisierungszeit wird der Restsauerstoff durch eine Sauerstoffelektrode überprüft. Sollte der gemessene Wert an Restsauerstoff in der flüssigen Phase den Wert 1 ppm übersteigen, muss erneut inertisiert werden, bis dieser Wert erreicht wird. Danach werden im leichten Stickstoffstrom 2,05 g 2,2'-Azobis(2,4-dimethylvaleronitril) zugegeben und der Reaktionskessel auf 40 °C erwärmt. Kurz nach Erreichen einer Innentemperatur von 40 °C wird das Einleiten von Stickstoffgas beendet und ein Start der Polymerisationsreaktion beobachtet, was durch eine Temperaturerhöhung von 10 bis 35 °C festgestellt werden kann. Ungefähr 5 - 15 Minuten nach Einsetzen der Polymerisationsreaktion ist das Temperaturmaximum überschritten und die Temperatur im Reaktionsgefäß wird durch das Heizbad bis zum Siedepunkt des 2-Methylpropan-2-ol / Wasser Gemisches erhöht. Unter leichten Rückfluss wird die nun viskose Masse zwei Stunden nachgerührt. Das Reaktionsprodukt, welches als Viskose Suspension von Polymer im 2-Methylpropan-2-ol / Wasser Gemisch vorliegt, wird durch abfiltrieren und anschließender Trocknung im Vakuumtrockenschrank abgetrennt.

Polymerisationsverfahren B2: Polymerisation in 2-Methylpropan-2-ol, Dimethylketon und Wasser als polares Lösemittel (75:25, 3,0 % Wasser)

In einem 2 Liter Quickfitkolben mit Ankerrührer, Rückflusskühler mit Abgaswäscher, kombiniertes Thermometer/pH-Meter und einem Gaseinleitungsrohr werden 582 g wasserfreies 2-Methylpropan-2-ol und 194 g Dimethylketon werden mit 24 g destillierten Wasser versetzt. Das Reaktionsgefäß befindet sich in einem Heizbadthermostaten. Die weiteren Schritte des Polymerisationsverfahrens B2 werden analog zu Polymerisationsverfahren B1 durchgeführt.

Polymerisationsverfahren B3: Polymerisation in 2-Methylpropan-2-ol, Dimethylketon und Wasser als polares Lösemittel (25:75, 5,0 % Wasser)

In einem 2 Liter Quickfitkolben mit Ankerrührer, Rückflusskühler mit Abgaswäscher, kombiniertes Thermometer/pH-Meter und einem Gaseinleitungsrohr werden 194 g wasserfreies 2-Methylpropan-2-ol und 582 g Dimethylketon werden mit 24 g destillierten Wasser versetzt. Das Reaktionsgefäß befindet sich in einem Heizbadthermostaten. Die weiteren Schritte des Polymerisationsverfahrens werden analog zu Polymerisationsverfahren B1 durchgeführt.

Tabelle 1a): Beispiele für erfindungsgemäße Polymere hergestellt nach den Polymerisationsverfahren A1 bis A5 und B1 bis B3

| Polymer | Verfahren | ACDMT | | Acrylsäure | | Acrylamid | | V-65® | | k-Wert |
|---|---|---|---|---|---|---|---|---|---|---|
| | | g | mol-% | g | mol-% | g | mol-% | g | Gew.-% | |
| 2 | A1 | 110,0 | 29,6 | 10,00 | 7,7 | 80,0 | 62,7 | 2,00 | 1,0 | 215 |
| 4 | A1 | 113,2 | 30,9 | 7,60 | 6,0 | 79,2 | 63,1 | 2,00 | 1,0 | 210 |
| 6 | A1 | 98,0 | 32,0 | 6,40 | 6,0 | 65,0 | 61,9 | 1,90 | 1,1 | 208 |
| 7 | A1 | 119,0 | 32,5 | 5,70 | 4,5 | 79,2 | 63,0 | 2,25 | 1,1 | 200 |
| 8 | A1 | 104,5 | 28,5 | 9,60 | 7,5 | 80,4 | 64,0 | 2,25 | 1,2 | 204 |
| 12 | A2 | 110,0 | 29,6 | 10,00 | 7,7 | 80,0 | 62,7 | 2,25 | 1,1 | 192 |
| 13 | A2 | 113,2 | 30,9 | 7,60 | 6,0 | 79,2 | 63,1 | 2,20 | 1,1 | 188 |
| 14 | A2 | 119,0 | 32,5 | 5,70 | 4,5 | 79,2 | 63,0 | 2,20 | 1,1 | 179 |
| 16 | A3 | 113,2 | 30,9 | 7,60 | 6,0 | 79,2 | 63,1 | 2,20 | 1,1 | 216 |
| 18 | A3 | 110,0 | 29,6 | 10,00 | 7,7 | 80,0 | 62,7 | 2,25 | 1,1 | 222 |
| 20 | A4 | 90,0 | 25,1 | 6,20 | 5,0 | 86,0 | 69,9 | 2,18 | 1,2 | 176 |

Tabelle 1b): Beispiele für erfindungsgemäße Polymere hergestellt nach den Polymerisationsverfahren A1 bis A5 und B1 bis B3

| Polymer | Verfahren | ACDMT | | Acrylsäure | | Acrylamid | | V-65® | | k-Wert |
|---|---|---|---|---|---|---|---|---|---|---|
| | | g | mol-% | g | mol-% | g | mol-% | g | Gew.-% | |
| 25 | B1 | 109,5 | 29,5 | 9,70 | 7,5 | 80,3 | 63,0 | 2,30 | 1,2 | 203 |
| 26 | B1 | 100,0 | 28,5 | 6,10 | 5,0 | 80,0 | 66,5 | 2,10 | 1,1 | 211 |
| 28 | B1 | 113,2 | 31,0 | 7,60 | 6,0 | 79,0 | 63,0 | 2,20 | 1,1 | 213 |
| 31 | B2 | 99,5 | 34,5 | 8,00 | 8,0 | 56,8 | 57,5 | 1,80 | 1,1 | 219 |
| 33 | B2 | 110,0 | 34,3 | 3,40 | 3,0 | 69,0 | 62,7 | 2,00 | 1,1 | 227 |
| 34 | B2 | 119,0 | 32,5 | 5,70 | 4,5 | 79,2 | 63,0 | 2,25 | 1,1 | 228 |
| 35 | B2 | 110,0 | 29,6 | 10,00 | 7,7 | 80,0 | 62,7 | 2,25 | 1,1 | 221 |
| 36 | B2 | 113,2 | 30,9 | 7,60 | 6,0 | 79,2 | 63,1 | 2,25 | 1,1 | 227 |
| 38 | B3 | 113,2 | 30,9 | 7,60 | 6,0 | 79,2 | 63,1 | 2,20 | 1,1 | 216 |
| 40 | B3 | 110,0 | 29,6 | 10,00 | 7,7 | 80,0 | 62,7 | 2,25 | 1,1 | 218 |

Tabelle 1c): Erfindungsgemäße Polymere nach Polymerisationsverfahren A1

| Polymer | Verfahren | ACDMT mol-% | Methacrylsäure mol-% | Acrylamid mol-% | V-65® g | k-Wert |
|---|---|---|---|---|---|---|
| 42 | A1 | 30 | 7 | 63 | 2,00 | 208 |
| 44 | A1 | 31 | 6 | 63 | 2,00 | 219 |

Tabelle 1d): Erfindungsgemäße Polymere nach Polymerisationsverfahren A1

| Polymer | Verfahren | ACDMT mol-% | Methacrylsäure mol-% | Dimethylacrylamid mol-% | V-65® g | k-Wert |
|---|---|---|---|---|---|---|
| 47 | A1 | 30 | 7 | 63 | 2,0 | 201 |
| 49 | A1 | 31 | 6 | 63 | 2,0 | 198 |

Tabelle 1e): Erfindungsgemäße Polymere nach Polymerisationsverfahren A1

| Polymer | Verfahren | ACDMT mol-% | CEA mol-% | Acrylamid mol-% | V-65® g | k-Wert |
|---|---|---|---|---|---|---|
| 52 | A1 | 30 | 7 | 63 | 2,0 | 217 |
| 54 | A1 | 31 | 6 | 63 | 2,0 | 209 |

Tabelle 1f): Erfindungsgemäße Polymere nach Polymerisationsverfahren A1

| Polymer | Verfahren | ACDMT mol-% | CEA mol-% | Dimethylacrylamid mol-% | V-65® g | k-Wert |
|---|---|---|---|---|---|---|
| 57 | A1 | 30 | 7 | 63 | 2,0 | 218 |
| 59 | A1 | 31 | 6 | 63 | 2,0 | 207 |

Tabelle 1g): Erfindungsgemäße Polymere nach Polymerisationsverfahren A1

| Polymer | Verfahren | ACDMT mol-% | CEA-Oligo mol-% | Acrylamid mol-% | V-65® g | k-Wert |
|---|---|---|---|---|---|---|
| 62 | A1 | 30 | 7 | 63 | 2,0 | 214 |
| 64 | A1 | 31 | 6 | 63 | 2,0 | 205 |

Tabelle 1h): Erfindungsgemäße Polymere nach Polymerisationsverfahren A1

| Polymer | Verfahren | ACDMT mol-% | CEA-Oligo mol-% | Dimethylacrylamid mol-% | V-65® g | k-Wert |
|---|---|---|---|---|---|---|
| 67 | A1 | 30 | 7 | 63 | 2,0 | 208 |
| 69 | A1 | 31 | 6 | 63 | 2,0 | 218 |

ACDMT = Acryloyldimethyltaurat
AS = Acrylsäure
AM = Acrylamid
CEA = Carboxyethylacrylat
CEA-Oligo = Carboxyethylacrylat Oligomeren-Mischung mit n = 0 bis 5
V-65 = 2,2'-Azobis(2,4-dimethylvaleronitril) / V-65 ist ein eingetragener Markennamen der Firma Wako Pure Chemicals Industries, Ltd

Vergleichsbeispiel 1 (nicht erfindungsgemäß, hergestellt gemäß EP-1045869 Copolymerisat hergestellt in Fällungspolymerisation 44,5 mol-% Acryloyldimethyltaurat und 55,5 mol-% Acrylamid)

In einem 3 Liter Quickfitkolben mit Ankerrührer, Rückflusskühler mit Abgaswäscher, kombiniertes Thermometer/pH-Meter und einem Gaseinleitungsrohr werden 1700 g wasserfreies 2-Methylpropan-2-ol mit 50 ml destillierten Wasser versetzt. Das Reaktionsgefäß befindet sich in einem Heizbadthermostaten.

Dieses Reaktionsgefäß wird mit Stickstoffgas überschichtet und im leichten Stickstoffgegenstrom 245 g Acryloyldimethyltaurat eingetragen. Das Acryloyldimethyltaurat löst sich im 2-Methylpropan-2-ol / Wasser Gemisch nicht vollständig auf und liegt teilweise als Feststoffdispersion vor. Der pH-Wert dieses Gemisches liegt unterhalb von pH 1. Durch das Gaseinleitungsrohr wird oberhalb der flüssigen Phase gasförmiges Ammoniak eingeleitet bis der pH-Wert der Dispersion zwischen 7 und 8 liegt. Nach Erreichen des gewünschten pH-Bereichs wird noch 1 Stunde nachgerührt

und der pH-Wert kontinuierlich erfasst. Das Reaktionsgefäß wird mit Stickstoff überschichtet und es werden 105 g Acrylamid eingetragen. Nach Eintrag des Acrylamids wird erneut der pH-Wert kontrolliert und gegebenenfalls in den Bereich pH 7bis 8 korrigiert. Es wird mindestens 1 Stunde ein konstanter Stickstoffstrom durch die Lösung geleitet. Nach dieser Inertisierungszeit wird der Restsauerstoff durch eine Sauerstoffelektrode überprüft. Sollte der gemessene Wert an Restsauerstoff in der flüssigen Phase den Wert 1 ppm übersteigen, muss erneut inertisiert werden, bis dieser Wert erreicht wird. Danach werden im leichten Stickstoffstrom 2 g AIBN zugegeben und der Reaktionskessel auf 60 °C erwärmt. Kurz nach Erreichen einer Innentemperatur von 60 °C wird das Einleiten von Stickstoffgas beendet und ein Start der Polymerisationsreaktion beobachtet, was durch eine Temperaturerhöhung von 10 - 15 °C festgestellt werden kann. Ungefähr 5 - 15 Minuten nach Einsetzen der Polymerisationsreaktion ist das Temperaturmaximum überschritten und die Temperatur im Reaktionsgefäß wird durch das Heizbad bis zum Siedepunkt des 2-Methylpropan-2-ol / Wasser Gemisches erhöht. Unter leichten Rückfluss wird die nun viskose Masse zwei Stunden nachgerührt. Das Reaktionsprodukt, welches als Viskose Suspension von Polymer im 2-Methylpropan-2-ol / Wasser Gemisch vorliegt, wird durch abfiltrieren und anschließender Trocknung im Vakuumtrockenschrank abgetrennt.

Ausbeute: 365 g

| | |
|---|---|
| Trockengehalt (IR-Trockner 15 Minuten bei 120 °C): | 96 % |
| K-Wert (0,5 %ige Lösung in destillierten Wasser): | 212 |

Vergleichsbeispiel 2 (nicht erfindungsgemäß, hergestellt gemäß EP-0244981 Copolymerisat hergestellt in einer wässrigen Gelpolymerisation 18,6 mol-% Acryloyldimethyltaurat, 10 mol-% Acrylsäure und 71,3 mol-% Acrylamid)

In EP-0244981 wird in den Beispielen auf eine Gelpolymerisation in herkömmlicher Weise verwiesen. Ein detailliertes Herstellverfahren der Polymere in EP-0244981 wird nicht beschrieben.

Für das Vergleichsbeispiel 2 wurde in einem 1 Liter Quickfitkolben mit Ankerrührer, Rückflusskühler mit Abgaswäscher, kombiniertes Thermometer/pH-Meter und einem Gaseinleitungsrohr werden 390 g destilliertes Wasser, 40 g Acryloyldimethyltaurat, 7,5 g Acrylsäure und 52,5 g Acrylamid vorgelegt. Durch die Reaktionslösung wird 1 Stunde Stickstoffgas geleitet. Danach werden 2 g Ammoniumperoxodisulfat aufgelöst in 10 g destilliertes Wasser als Initiator zugegen. Diese Mischung wird auf 40 °C erwärmt, bis nach 10 - 15 Minuten eine Polymerisationsreaktion eintritt. Nach Durchlaufen des Temperaturmaximums wird die Innentemperatur durch den Thermostaten auf 60 °C eingestellt. Es bildet sich ein klares, hochviskoses Gel. Das Gel wird mechanisch zerkleinert und im Vakuumtrockenschrank getrocknet.

Vergleichsbeispiel 3 (nicht erfindungsgemäß, hergestellt gemäß EP-0244981 Copolymerisat hergestellt in einer wässrigen Gelpolymerisation 34 mol-% Acryloyldimethyltaurat, 11,4 mol-% Acrylsäure und 54,6 mol-% Acrylamid).

Für das Vergleichsbeispiel 3 wurde in einem 1 Liter Quickfitkolben mit Ankerrührer, Rückflusskühler mit Abgaswäscher, kombiniertes Thermometer/pH-Meter und einem Gaseinleitungsrohr werden 390 g destilliertes Wasser, 60 g Acryloyldimethyltaurat, 7 g Acrylsäure und 11,4 g Acrylamid vorgelegt. Durch die Reaktionslösung wird 1 Stunde Stickstoffgas geleitet. Danach werden 2 g Ammoniumperoxodisulfat aufgelöst in 10 g destilliertes Wasser als Initiator zugegen. Diese Mischung wird auf 40 °C erwärmt, bis nach 10 - 15 Minuten eine Polymerisationsreaktion eintritt. Nach Durchlaufen des Temperaturmaximums wird die Innentemperatur durch den Thermostaten auf 60 °C eingestellt. Es bildet sich ein klares, hochviskoses Gel. Das Gel wird mechanisch zerkleinert und im Vakuumtrockenschrank getrocknet.

Vergleichsbeispiel 4 (nicht erfindungsgemäß, hergestellt gemäß EP-0244981 Copolymerisat hergestellt in einer wässrigen Gelpolymerisation 10,3 mol-% Acryloyldimethyltaurat, 5,9 mol-% Acrylsäure und 84,9 mol-% Acrylamid). Das Vergleichsbeispiel 4 wurde analog zu Vergleichsbeispiel 2 hergestellt.

Für das Vergleichsbeispiel 4 wurde in einem 1 Liter Quickfitkolben mit Ankerrührer, Rückflusskühler mit Abgaswäscher, kombiniertes Thermometer/pH-Meter und einem Gaseinleitungsrohr werden 390 g destilliertes Wasser, 25 g Acryloyldimethyltaurat, 5 g Acrylsäure und 70 g Acrylamid vorgelegt. Durch die Reaktionslösung wird 1 Stunde Stickstoffgas geleitet. Danach werden 2 g Ammoniumperoxodisulfat aufgelöst in 10 g destilliertes Wasser als Initiator zugegen. Diese Mischung wird auf 40 °C erwärmt, bis nach 10 - 15 Minuten eine Polymerisationsreaktion eintritt. Nach Durchlaufen des Temperaturmaximums wird die Innentemperatur durch den Thermostaten auf 60 °C eingestellt. Es bildet sich ein klares, hochviskoses Gel. Das Gel wird mechanisch zerkleinert und im Vakuumtrockenschrank getrocknet.

Vergleichsbeispiel 5 (nicht erfindungsgemäß, hergestellt gemäß US-4015991 Copolymerisat hergestellt in einer wässrigen Gelpolymerisation 10,3 mol-% Acryloyldimethyltaurat, 5,9 mol-% Acrylsäure und 84,9 mol-% Acrylamid).

In einem 3 Liter Quickfitkolben mit Ankerrührer, Rückflusskühler mit Abgaswäscher, kombiniertes Thermometer/pH-Meter und einem Gaseinleitungsrohr werden 328 g destilliertes Wasser vorgelegt und 116,4 g Acryloyldimethyltaurat. Das Acryloyldimethyltaurat wird durch Zugabe von 45 g einer 50 % Lösung Natronlauge (NaOH) neutralisiert. Nach der Neutralisationsreaktion erhält man eine klare Lösung mit einem pH-Wert zwischen 7 und 8. In der so neutralisierten Lösung löst man 14,7 g Acrylamid langsam auf. Durch die Reaktionslösung wird 1 Stunde Stickstoffgas geleitet. Danach werden 0,69 g tert.-Butylperoxypivalat und 1,0 ml einer Eisenammoniumsulfatlösung als Redoxstarterpaar zugegen. Die Eisenammoniumsulfatlösung wird durch Auflösen von 0,098 g $Fe(NH_4)_2(SO_4)_2$ in 500 g Wasser hergestellt. Diese Mischung wird weiterhin bei Raumtemperatur gerührt, bis nach 1 - 2 Stunden eine Polymerisationsreaktion eintritt. Durch die exotherme Polymerisationsreaktion erhöht sich bei adiabatischer Polymerisation die Temperatur auf 50 - 60 °C. Nach Durchlaufen des Temperaturmaximums wird die Innentemperatur durch den Thermostaten auf 60 °C eingestellt. Es bildet sich ein klares, hochviskoses Gel. Das Gel wird mechanisch zerkleinert auf einem Walzentrockner getrocknet.

Ausbeute: 152 g Vergleichspolymer 5

Dieses Grundpolymer sollte gemäß der Ausprüfung in US-4015991 nur schlechte wasserreduzierende Wirkung besitzen. Dagegen sollen bei niedrigen Temperaturen 28 °C die teilverseiften Produkte gute anwendungstechnische Eigenschaften besitzen. Diese Produkte wurden wie im Vergleichsbeispiel 6 hergestellt und ausgeprüft.

Vergleichsbeispiel 6 (nicht erfindungsgemäß, hergestellt gemäß US-4015991) Kontrollierte Hydrolyse von Vergleichspolymer 5

45,3 g des Vergleichspolymers 5 werden in 1500 ml destillierten Wasser unter Rühren gelöst. Nach vollständigem Auflösen des Polymers gibt man 1,68 g Kaliumhydroxid hinzu welches zuvor in 20 ml Wasser aufgelöst wurde. Diese Mischung wird auf 60 °C erhitzt und eine Stunde bei dieser Temperatur gerührt. Das Reaktionsprodukt wird wieder mit Hilfe eines Walzentrockners getrocknet. Damit wird eine 50 %ige Hydrolyse erreicht.

Beispiele: Synergistische Mischungen mit Stärke und den erfindungsgemäßen Polymeren.

Für die Synergistischen Mischungen mit Stärke und den erfindungsgemäßen Polymeren wurden die folgenden Stärketypen verwendet:

Stärke A: Maisstärke
Stärke B: Maniokstärke
Stärke C: "cook up modified Starch"
Stärke D: Hydroxypropylstärke

Die Tabelle 2 beschreibt die durchgeführten Mischungen mit den Stärken A bis E und den erfindungsgemäßen Polymeren.

Tabelle 2a): Synergistische Mischungen mit Stärke und den erfindungsgemäßen Polymeren

| Mischung | Stärke | Gew.-% | Polymer | Gew.-% |
|---|---|---|---|---|
| 1 | A | 30 | (4) | 70 |
| 2 | A | 50 | (4) | 50 |
| 3 | A | 70 | (4) | 30 |
| 4 | B | 50 | (4) | 50 |
| 5 | D | 60 | (4) | 40 |
| 6 | A | 25 | (42) | 75 |
| 7 | A | 40 | (42) | 60 |
| 8 | A | 65 | (42) | 35 |
| 9 | B | 25 | (42) | 75 |

(fortgesetzt)

| Mischung | Stärke | Gew.-% | Polymer | Gew.-% |
|---|---|---|---|---|
| 10 | B | 40 | (42) | 60 |
| 11 | B | 65 | (42) | 35 |
| 12 | B | 50 | (52) | 50 |
| 13 | C | 50 | (52) | 50 |
| 14 | D | 50 | (52) | 50 |

Tabelle 2b): Synergistische Mischungen mit Stärke und den erfindungsgemäßen Polymeren

| Mischung | Stärke | Gew.-% | Polymer | Gew.-% |
|---|---|---|---|---|
| 15 | D | 40 | (52) | 60 |
| 16 | D | 60 | (52) | 40 |
| 17 | A | 75 | (7) | 25 |
| 18 | D | 50 | (7) | 50 |
| 25 | A | 45 | (26) | 55 |
| 26 | E | 65 | (26) | 35 |
| 27 | A | 50 | (49) | 50 |
| 28 | A | 45 | (49) | 50 |
| 29 | A | 65 | (49) | 35 |
| 30 | B | 50 | (49) | 50 |
| 31 | C | 45 | (49) | 50 |
| 32 | D | 65 | (49) | 35 |
| 33 | A | 50 | (54) | 50 |
| 34 | B | 50 | (54) | 50 |
| 35 | D | 50 | (54) | 50 |

Beispiele: Testergebnisse:

Die Ausprüfung erfolgt gemäß API spec. 10. Im atmosphärischen Konsistometer wird der Zementschlamm bei Untersuchungstemperatur gerührt/konditioniert und dann bei gleicher Temperatur die Rheologie mit dem FANN Viskosimeter Modell 35SA (bei Hochtemperatur wird bei 93 °C konditioniert und die Viskosität gemessen). Bei Temperaturen > 93 °C wird der Wasserverlust mit einem Stirring Fluid Loss Apparatus (SFLA) gemessen.

Die Tabelle 3 zeigt die wasserverlustreduzierenden Eigenschaften von ausgewählten oben genannten Beispielen laut API spec. 10 bei 35 °C (95 °F) im statischen Filtrationstest in der Baroid HTHP Filterpress. Deutlich wird dabei, dass mit den erfindungsgemäßen Polymeren die Wasserverlustreduzierung bei niedrigen Temperaturen erheblich im Vergleich zu den Vergleichsbeispielen verbessert werden kann. Natürlich reduzieren bei diesen niedrigen Temperaturen auch die in EP-1045869 beanspruchten Polymere auf Basis von Acryloyldimethyltaurat und Acrylamid, nachgestellt in Vergleichsbeispiel 1 den Wasserverlust. Aus Tabelle 1 wird jedoch deutlich, dass der Wasserlust des Vergleichsbeispiel 1 im Vergleich zu dem erfindungsgemäßen Polymer 4 nahezu doppelt so groß ist. Die in EP-0244981 beschrieben Gelpolymere, nachgestellt in den Vergleichsbeispielen 2 bis 3 zeigen schon bei sehr niedrigen Temperaturen einen hohen Wasserverlust und sind für die Anwendung nicht geeignet. Aus diesem Grund wurden die Vergleichsbeispiele 2 bis 3 in den nachfolgenden Messungen nicht betrachtet. Auch die beiden Vergleichsbeispiele aus US-4015991 auf Basis teilhydrolisiertem Poly(Acrylamid-co-Acryloyldimethyltaurat), nachgestellt in den Vergleichsbeispielen 5 und 6 weisen im direkten Vergleich zu Polymer 4 ebenfalls einen nahezu doppelten bis dreifachen Wasserverlust aus. Auch diese Polymere scheinen für die Anwendung ungeeignet zu sein.

Formulierung der Zementschlämme:

100 g Dyckerhoff Class G
44 g destilliertes Wasser
0,3 - 0,5 g Polymer

Tabelle 3: (Anwendungstest bei 95 °F (35 °C))

| Polymer Nr. | Konzentration Gew.-% | Rheologie nach dem Mischen bei 75 °F (24 °C), Skalenteile bei X Umdrehungen pro Minute Umdrehungen pro Minute /rpm | | | | | | API Fluid Loss ml |
|---|---|---|---|---|---|---|---|---|
| | | 600 | 300 | 200 | 100 | 6 | 3 | |
| 2 (P) | 0,5 | 95 | 74 | 46 | 33 | 6 | 3 | 60 |
| 4 (P) | 0,3 | 108 | 77 | 44 | 30 | 5 | 3,5 | 58 |
| 8 (P) | 0,3 | 103 | 73 | 39 | 28 | 4 | 3 | 72 |
| 13 (P) | 0,3 | 90 | 72 | 38 | 25 | 4 | 3 | 75 |
| 16 (P) | 0,3 | 110 | 87 | 53 | 36 | 5 | 3,5 | 95 |
| 18 (P) | 0,3 | 95 | 73 | 45 | 26 | 4 | 3 | 85 |
| 20 (P) | 0,5 | 88 | 67 | 47 | 28 | 4,5 | 3,5 | 66 |
| 28 (P) | 0,3 | 87 | 69 | 39 | 26 | 5 | 3 | 65 |
| 33 (P) | 0,3 | 98 | 82 | 59 | 30 | 6 | 3,5 | 70 |
| 36 (P) | 0,3 | 86 | 63 | 42 | 30 | 5 | 3,5 | 68 |
| | | | | | | | | |
| 1 (V) | 0,3 | 94 | 68 | 39 | 26 | 5 | 3 | 115 |
| 2 (V) | 0,3 | 290 | 167 | 118 | 67 | 7,5 | 4,5 | 470* |
| 3 (V) | 0,3 | 120 | 105 | 77 | 56 | 11 | 5 | 660* |
| 4 (V) | 0,3 | 275 | 151 | 116 | 59 | 9 | 6,5 | 270* |
| 5 (V) | 0,3 | 168 | 88 | 68 | 38 | 11 | 11,5 | 143* |
| 6 (V) | 0,3 | 225 | 117 | 84 | 43 | 7 | 4,5 | 178* |

(P) = Erfindungsgemäßes Polymer (Bsp.: 30 (P) = erfindungsgemäßes Polymer 30 aus Tabelle 1a))
(V) = nicht erfindungsgemäßes Vergleichsbeispiel (Bsp. 5(V) = Vergleichsbeispiel 5)
[*] Werte sind errechnet, da das gesamte Wasser ausgepresst war, bevor der Test beendet war.

Die Tabelle 4 zeigt die wasserverlustreduzierenden Eigenschaften von ausgewählten oben genannten Beispielen laut API spec. 10 bei 121,1 °C (250 °F) im gerührten Filtrationstest in der Fann HTHP Filterpresse (Stirring Fluid Loss Apparatus, SFLA). Um die verbesserten Eigenschaften der erfindungsgemäßen Polymeren gegenüber dem Stand der Technik der in EP1045869 beanspruchten Polymere (Vergleichsbeispiel 1) besser aufzuzeigen, wurde die Konzentration der eingesetzten Polymere zwischen 0,25 und 0,5 Gew.-% variiert. Deutlich wird dabei, dass mit den erfindungsgemäßen Polymeren bei geringeren Konzentrationen (0,25 Gew.-%) 40 Gew.-% weniger Wasser verlieren (80 ml) als die beanspruchten Polymere in EP 1045869 (130 ml)

Formulierung der Zementschlämme:

100 g Dyckerhoff Glass G Cement
35 g Silica Flour
54,8 g Destilliertes Wasser
Polymer in der in Tabelle 3 oder 4 angegebenen Konzentration
0,3 g Dispersant (Polynaphthalinsulfonat, PNS)
0,5 g Retarder (Ligninsulfonat)

Tabelle 4: (Anwendungstest bei 250 °F (121,1 °C))

| Polymer Nr. | Konzentration Gew.-% | Rheologie nach dem Mischen bei 75 °F (24 °C), Skalenteile bei X Umdrehungen pro Minute Umdrehungen pro Minute /rpm | | | | | | API Fluid Loss ml |
|---|---|---|---|---|---|---|---|---|
| | | 600 | 300 | 200 | 100 | 6 | 3 | |
| 1 (V) | 0,25 | 167 | 91 | 63 | 34 | 5 | 3,5 | 130 |
| 1 (V) | 0,5 | > 300 | 168 | 117 | 64 | 7,5 | 5,0 | 52 |
| 4 (P) | 0,25 | 170 | 91 | 63 | 34 | 5 | 3,5 | 80 |
| 4 (P) | 0,5 | > 300 | 174 | 119 | 65 | 7 | 4,5 | 42 |
| 2 (P) | 0,5 | 295 | 164 | 113 | 62 | 7 | 4,5 | 44 |
| 4 (P) | 0,5 | > 300 | 174 | 119 | 65 | 7 | 4,5 | 42 |
| 13 (P) | 0,5 | > 300 | 179 | 126 | 70 | 8 | 5 | 40 |
| 7 (P) | 0,5 | > 300 | 174 | 123 | 68 | 7 | 4 | 43 |
| 31 (P) | 0,5 | > 300 | 167 | 121 | 58 | 7,5 | 3,5 | 54 |
| 26 (P) | 0,5 | 295 | 173 | 119 | 64 | 7 | 4,5 | 60 |
| (P) = Erfindungsgemäßes Polymer (Bsp.: 30 (P) = erfindungsgemäßes Polymer 30 aus Tabelle 1a)) | | | | | | | | |

Die Tabelle 5 zeigt die wasserverlustreduzierenden Eigenschaften von ausgewählten oben genannten Mischung aus Stärke und den erfindungsgemäßen Polymeren laut API spec. 10 unter verschiedenen Temperaturbedingungen (250 °F, 300 °F und 350 °F) im gerührten Filtrationstest in der Fann HTHP Filterpresse (Stirring Fluid Loss Apparatus, SFLA).

Formulierung der Zementschlämme:

100 g Dyckerhoff Glass G Cement
35 g Silica Flour
54,8 g Destilliertes Wasser
Polymer in der in Tabelle 3 oder 4 angegebenen Konzentration
0,3 g Dispersant (Polynaphthalinsulfonat, PNS)
0,5 - 1,5 g Retarder (Ligninsulfonat)

Tabelle 5: (Anwendungstests der Mischungen bei verschiedenen Temperaturen)

| Mischung | Temp. °F | Rheology nach dem Mischen bei 75 °F (24°C), Skalenteile bei X Umdrehungen pro Minute Umdrehungen pro Minute /rpm | | | | | | API Fluid Loss ml |
|---|---|---|---|---|---|---|---|---|
| | | 600 | 300 | 200 | 100 | 6 | 3 | |
| 2 | 250 | 188 | 104 | 71 | 38 | 5 | 4 | 102 |
| 4 | 250 | 173 | 93 | 63 | 34 | 6 | 5 | 106 |
| 3 | 250 | 208 | 115 | 79 | 43 | 6 | 4,5 | 60 |
| 2 | 300 | 191 | 108 | 74 | 42 | 8,5 | 9 | 52 |
| 4 | 300 | 203 | 113 | 78 | 43 | 7,5 | 6,5 | 46 |
| 3 | 300 | 242 | 133 | 94 | 52 | 9 | 7,5 | 43 |
| 3 | 300 | 228 | 127 | 88 | 49 | 9 | 7,5 | 41 |
| 2 | 350 | 206 | 119 | 91 | 50 | 15 | 14 | 96 |
| 3 | 350 | 217 | 123 | 89 | 54 | 13,5 | 12,5 | 92 |
| (P) = Erfindungsgemäßes Polymer (Bsp.: 30 (P) = erfindungsgemäßes Polymer 30 aus Tabelle 1a)) | | | | | | | | |

Die Aufgabe der vorliegenden Erfindung war es, Polymere bereit zu stellen, mit deren Hilfe eine verbesserte Flüssigkeitsverlustkontrolle in den Zementschlämmen zur Zementation von Tiefbohrungen bei Temperaturen zwischen 80°F und 300°F erreicht werden kann. In WO-99/26991 werden Copolymere aus AMPS und Acrylamid beschrieben. In der Tabelle 4 auf Seite 23 wird offenbart, dass die wasserverlustreduzierenden Eigenschaften der beschriebenen Polymere in einem Temperaturbereich zwischen 100 °F und 200 °F deutlich nachlassen und der Wasserverlust sich im Anwendungstest teilweise sich verdoppelt. Durch den Zusatz von Acrylsäure im den erfindungsgemäßen Polymeren wird der Wasserverlust in Vergleich zu den Polymeren der WO-99/26991 deutlich verbessert. Die nachfolgenden Vergleichsbeispiele sollen dies belegen.

Vergleichsbeispiele nach WO-99/26991:

Vergleichspolymer 7: (nicht erfindungsgemäß, hergestellt gemäß WO-99/26991 - Copolymerisat aus Acryloyldimethyltaurat 70 Gew.-% und Acrylamid 30 Gew.-%)

In einem 3 Liter Quickfitkolben mit Ankerrührer, Rückflusskühler mit Abgaswäscher, kombiniertes Thermometer/pH-Meter und einem Gaseinleitungsrohr werden 1700 g wasserfreies 2-Methylpropan-2-ol mit 50 ml destillierten Wasser versetzt. Das Reaktionsgefäß befindet sich in einem Heizbadthermostaten.

Dieses Reaktionsgefäß wird mit Stickstoffgas überschichtet und im leichten Stickstoffgegenstrom 245 g Acryloyldimethyltaurat eingetragen. Das Acryloyldimethyltaurat löst sich im 2-Methylpropan-2-ol / Wasser Gemisch nicht vollständig auf und liegt teilweise als Feststoffdispersion vor. Der pH-Wert dieses Gemisches liegt unterhalb von pH 1. Durch das Gaseinleitungsrohr wird oberhalb der flüssigen Phase gasförmiges Ammoniak eingeleitet bis der pH-Wert der Dispersion zwischen 7 und 8 liegt. Nach Erreichen des gewünschten pH-Bereichs wird noch 1 Stunde nachgerührt und der pH-Wert kontinuierlich erfasst. Das Reaktionsgefäß wird mit Stickstoff überschichtet und es werden 105 g Acrylamid eingetragen. Nach Eintrag des Acrylamids wird erneut der pH-Wert kontrolliert und gegebenenfalls in den Bereich pH 7 bis 8 korrigiert. Es wird mindestens 1 Stunde ein konstanter Stickstoffstrom durch die Lösung geleitet. Nach dieser Inertisierungszeit wird der Restsauerstoff durch eine Sauerstoffelektrode überprüft. Sollte der gemessene Wert an Restsauerstoff in der flüssigen Phase den Wert 1 ppm übersteigen, muss erneut inertisiert werden, bis dieser Wert erreicht wird. Danach werden im leichten Stickstoffstrom 1,5 g AIBN zugegeben und der Reaktionskessel auf 60 °C erwärmt. Kurz nach Erreichen einer Innentemperatur von 60 °C wird das Einleiten von Stickstoffgas beendet und ein Start der Polymerisationsreaktion beobachtet, was durch eine Temperaturerhöhung von 10 bis 15 °C festgestellt werden kann. Ungefähr 5 - 15 Minuten nach Einsetzen der Polymerisationsreaktion ist das Temperaturmaximum überschritten und die Temperatur im Reaktionsgefäß wird durch das Heizbad bis zum Siedepunkt des 2-Methylpropan-2-ol / Wasser Gemisches erhöht. Unter leichten Rückfluss wird die nun viskose Masse zwei Stunden nachgerührt. Das Reaktionsprodukt, welches als Viskose Suspension von Polymer im 2-Methylpropan-2-ol / Wasser Gemisch vorliegt, wird durch abfiltrieren und anschließender Trocknung im Vakuumtrockenschrank abgetrennt.

Ausbeute: 362 g

| | |
|---|---|
| Trockengehalt (IR-Trockner 15 Minuten bei 120 °C): | 97,5 % |
| K-Wert (0,5 %ige Lösung in destillierten Wasser): | 208 |

Vergleichspolymer 8 (nicht erfindungsgemäß, hergestellt gemäß WO-99/26991 - Copolymerisat aus Acryloyldimethyltaurat 60 Gew.-% und Acrylamid 40 Gew.-%)

Das Vergleichsbeispiel wird analog zum Vergleichspolymer 7 hergestellt. Anstelle der in Vergleichspolymer 7 genannten Mengen werden 210 g Acryloyldimethyltaurat und 140 g Acrylamid verwendet.

Ausbeute: 371 g

| | |
|---|---|
| Trockengehalt (IR-Trockner 15 Minuten bei 120 °C): | 95,5 % |
| K-Wert (0,5 %ige Lösung in destillierten Wasser): | 219 |

Vergleichspolymer 9 (nicht erfindungsgemäß, hergestellt gemäß WO-99/26991 - Copolymerisat aus Acryloyldimethyltaurat 60 Gew.-% und Acrylamid 40 Gew.-%)

Das Vergleichsbeispiel wird analog zum Vergleichspolymer 7 hergestellt. Anstelle der in Vergleichspolymer 7 genannten Mengen werden 280 g Acryloyldimethyltaurat und 70 g Acrylamid verwendet.

Ausbeute: 363 g

| | |
|---|---|
| Trockengehalt (IR-Trockner 15 Minuten bei 120 °C): | 96 % |
| K-Wert (0,5 %ige Lösung in destillierten Wasser): | 201 |

Beispiele Testergebnisse:

Die Ausprüfung erfolgt gemäß API spec. 10. Im atmosphärischen Konsistometer wird der Zementschlamm bei Untersuchungstemperatur gerührt/konditioniert und dann bei gleicher Temperatur die Rheologie mit dem FANN Viskosimeter Modell 35SA (bei Hochtemperatur wird bei 93 °C konditioniert und die Viskosität gemessen) und der Wasserverlust bei unter 120 °C mit Baroid HTHP Filterpresse bzw. bei über 120 °C mit dem Stirring Fluid Loss Test Apparatur gemessen. Die Abbindezeiten wurden mit einem HTHP Konsistometer der Marke Autoclave Engineers ermittelt. Formulierung der Zementschlämme: ad 100 % Dyckerhoff Glass G Cement, 43,7 % Destilliertes Wasser 0,3 % Polymer.

Die Tabelle 6 zeigt die wasserverlustreduzierenden Eigenschaften von ausgewählten oben genannten Beispielen laut API spec. 10 bei 35 °C (95 °F) im statischen Filtrationstest in der Baroid HTHP Filterpress. Deutlich wird dabei, dass mit den erfindungsgemäßen Polymeren die Wasserverlustreduzierung bei niedrigen Temperaturen erheblich im Vergleich zu den Vergleichsbeispielen verbessert werden konnten. Das Vergleichsbeispiel 7 unterscheidet sich von dem Vergleichsbeispiel 1 nur durch einen etwas geringere Initiatormenge (1,5 g statt 2,0) der gemessene K-Wert beider genannten Polymere ist identisch zu dem in WO-99/26991 angegebenen Wert und liegt bei 212. Beide Polymere wurden nach demselben Verfahren als Fällungspolymer in tert. BuOH synthetisiert.

Tabelle 6: API spec. 10 bei 35 °C (95 °F) der erfindungsgemäßen Polymere im Vergleich zu den Vergleichsbeispielen 1, 6 bis 8

| Polymer Nr. | Konzentration Gew.-% | Rheologie nach dem Mischen bei 75 °F (24 °C), Skalenteile bei X Umdrehungen pro Minute Umdrehungen pro Minute /rpm | | | | | | API Fluid Loss ml |
|---|---|---|---|---|---|---|---|---|
| | | 600 | 300 | 200 | 100 | 6 | 3 | |
| 2 (P) | 0.5 | 95 | 74 | 46 | 33 | 6 | 3 | 60 |
| 4 (P) | 0.3 | 108 | 77 | 44 | 30 | 5 | 3,5 | 58 |
| 8 (P) | 0.3 | 103 | 73 | 39 | 28 | 4 | 3 | 72 |
| 13 (P) | 0.3 | 90 | 72 | 38 | 25 | 4 | 3 | 75 |
| 20 (P) | 0.5 | 88 | 67 | 47 | 28 | 4,5 | 3,5 | 66 |
| 28 (P) | 0.3 | 87 | 69 | 39 | 26 | 5 | 3 | 65 |
| 33 (P) | 0.3 | 98 | 82 | 59 | 30 | 6 | 3,5 | 70 |
| 36 (P) | 0.3 | 86 | 63 | 42 | 30 | 5 | 3,5 | 68 |
| 1 (V) | 0.3 | 94 | 68 | 39 | 26 | 5 | 3 | 115 |
| 7 (V) | 0.3 | 96 | 72 | 41 | 26 | 4,5 | 3,5 | 109 |
| 8 (V) | 0.3 | 113 | 81 | 47 | 29 | 6 | 3 | 121 |
| 9 (V) | 0.3 | 87 | 75 | 54 | 33 | 6 | 4 | 116 |
| (P) = Polymer<br>(V) = Vergleichsbeispiel | | | | | | | | |

Tabelle 7: API spec. 10 bei 250 °F (121,1 °C) der erfindungsgemäßen Polymere im Vergleich zu den Vergleichsbeispielen 1, 6 bis 8

| Polymer Nr. | Konzentration Gew.-% | Rheologie nach dem Mischen bei 75 °F (24 °C), Skalenteile bei X Umdrehungen pro Minute Umdrehungen pro Minute /rpm | | | | | | API Fluid Loss ml |
|---|---|---|---|---|---|---|---|---|
| | | 600 | 300 | 200 | 100 | 6 | 3 | |
| 4 (P) | 0,5 | > 300 | 174 | 119 | 65 | 7 | 4,5 | 42 |
| 2 (P) | 0,5 | 295 | 164 | 113 | 62 | 7 | 4,5 | 44 |
| 13 (P) | 0,5 | > 300 | 179 | 126 | 70 | 8 | 5 | 40 |
| 7 (P) | 0,5 | > 300 | 174 | 123 | 68 | 7 | 4 | 43 |
| 31 (P) | 0,5 | > 300 | 167 | 121 | 58 | 7,5 | 3,5 | 54 |
| | | | | | | | | |
| 1 (V) | 0,5 | > 300 | 168 | 117 | 64 | 7,5 | 5,0 | 52 |
| 7 (V) | 0,5 | > 300 | 175 | 113 | 67 | 7 | 5 | 54 |
| 8 (V) | 0,5 | > 300 | 187 | 129 | 72 | 8 | 6 | 60 |
| 9 (V) | 0,5 | > 300 | 159 | 110 | 63 | 7 | 4,5 | 58 |
| (P) = Polymer<br>(V) = Vergleichsbeispiel | | | | | | | | |

In Tabelle 6 konnte eine Verbesserung der wasserverlustreduzierenden Eigenschaften bei 95 °F nachgewiesen werden. Die wasserverlustreduzierenden Eigenschaften des Vergleichsbeispiels 7 im direkten Vergleich zum Vergleichsbeispiel 1 zeigen nahezu identische Werte und belegen die Reproduzierbarkeit des eingesetzten Verfahrens. Dennoch ist der Wasserverlust der Vergleichspolymere 1, 6 bis 9 mit durchschnittlich 115 ml +/- 5 ml deutlich höher als die der erfindungsgemäßen Polymere. Die Differenz des Wasserverlustes der erfindungsgemäßen Polymeren zu den Vergleichspolymeren betrug zwischen 30 bis 55 ml. Dies belegt eindeutig, dass der Zusatz von Acrylsäure zu einer technischen Verbesserung bei niedrigeren Temperaturen führt.

Die Tabelle 7 zeigt die wasserverlustreduzierenden Eigenschaften von ausgewählten oben genannten Beispielen laut API spec. 10 bei 250 °F (121,1 °C) im statischen Filtrationstest in der Baroid HTHP Filterpress. Auch in diesem Test konnte gezeigt werden, dass die erfindungsgemäßen Polymere bei Temperaturen zwischen 80 °F und 300 °F und unter gleichen Versuchsbedingungen einen nachweislich geringeren Wasserverlust aufweisen, als die Polymere der WO-99/26991. Führt man den erneuten Vergleich zwischen dem Vergleichsbeispiel 7 der WO-99/26991 und dem Vergleichsbeispiel 1 (nach EP 1045869) zeigt sich auch in diesem Test die gute Reproduzierbarkeit des eingesetzten Verfahrens. Die durchgeführten Anwendungstests nach API spec. 10. Bei 95 °F und 250 °F belegen deutlich, dass ein Zusatz von Acrylsäure in den erfindungsgemäßen Polymeren zu einer Verbesserung der wasserverlustreduzierenden Eigenschaften führt.

## Patentansprüche

**1.** Wasserlösliche oder wasserquellbare Polymere mit einem k-Wert von 100 bis 300, gemessen in 0,5 Gew.-% Lösung im destilliertem Wasser, enthaltend

a) 25 - 35 mol-% einer oder mehrerer wiederkehrender Struktureinheiten der Formel (1)

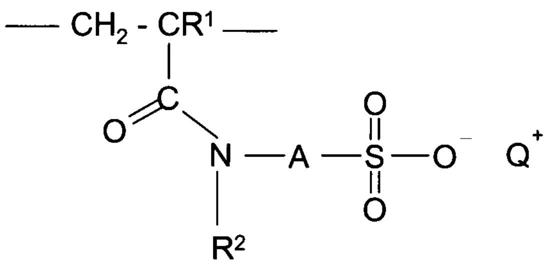

(1)

worin

$R^1$, $R^2$ Wasserstoff, Methyl oder Ethyl,
A lineares oder verzweigtes $C_1$-$C_{12}$-Alkylen bedeuten, und
$Q^+$ für $H^+$, $NH_4^+$, $Li^+$, $Na^+$, $K^+$, ½ $Ca^{++}$, ½ $Mg^{++}$, ½ $Zn^{++}$, 1/3 $Al^{+++}$, organische Ammoniumionen der Formel $[HNR^5R^6R^7]^+$, wobei $R^5$, $R^6$ und $R^7$ unabhängig voneinander Wasserstoff, eine lineare oder verzweigte Alkylgruppe mit 1 bis 22 Kohlenstoffatomen, eine lineare oder verzweigte, einfach oder mehrfach ungesättigte Alkenylgruppe mit 2 bis 22 Kohlenstoffatomen, eine $C_6$-$C_{22}$-Alkylamidopropylgruppe, eine lineare Mono-Hydroxyalkylgruppe mit 2 bis 10 Kohlenstoffatomen oder eine lineare oder verzweigte Di-Hydroxyalkylgruppe mit 3 bis 10 Kohlenstoffatomen sein können, und wobei mindestens einer der Reste $R^5$, $R^6$ und $R^7$ nicht Wasserstoff ist, oder für Mischungen aus diesen Ionen steht,

b) 3 bis 8 mol-% einer oder mehrerer wiederkehrender Struktureinheiten der Formel (2)

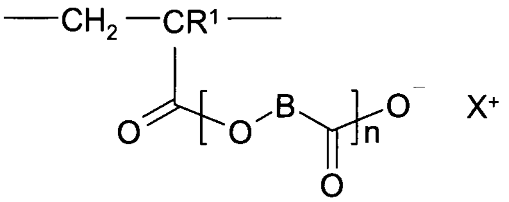

(2)

worin

$R^1$ Wasserstoff, Methyl oder Ethyl bedeutet,
$X^+$ für $H^+$, $NH_4^+$, $Li^+$, $Na^+$, $K^+$, ½ $Ca^{++}$, ½ $Mg^{++}$, ½ $Zn^{++}$, 1/3 $Al^{+++}$, organische Ammoniumionen der Formel $[HNR^5R^6R^7]^+$, wobei $R^5$, $R^6$ und $R^7$ unabhängig voneinander Wasserstoff, eine lineare oder verzweigte Alkylgruppe mit 1 bis 22 Kohlenstoffatomen, eine lineare oder verzweigte, einfach oder mehrfach ungesättigte Alkenylgruppe mit 2 bis 22 Kohlenstoffatomen, eine $C_6$-$C_{22}$-Alkylamidopropylgruppe, eine lineare Mono-Hydroxyalkylgruppe mit 2 bis 10 Kohlenstoffatomen oder eine lineare oder verzweigte Di-Hydroxyalkylgruppe mit 3 bis 10 Kohlenstoffatomen sein können, und wobei mindestens einer der Reste $R^5$, $R^6$ und $R^7$ nicht Wasserstoff ist, oder für Mischungen aus diesen Ionen steht,
B eine chemische Bindung, oder eine lineare oder verzweigte Alkylengruppe mit 1 bis 6 Kohlenstoffatomen ist, und
n eine ganze Zahl von 0 bis 5 ist,

und
c) 57 bis 72 mol-% einer oder mehrerer wiederkehrender Struktureinheiten der Formel (3)

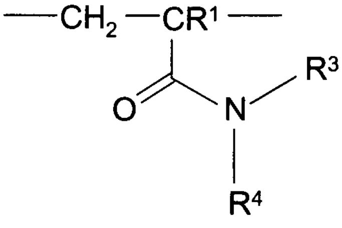

(3)

worin

$R^1$ Wasserstoff, Methyl oder Ethyl, und
$R^3$ und $R^4$ unabhängig voneinander Wasserstoff, Methyl, Ethyl, n-Propyl, iso-Propyl oder Butyl bedeuten.

**2.** Polymer nach Anspruch 1, **dadurch gekennzeichnet, dass** die Struktureinheiten der Formel (1) abgeleitet sind von Monomeren aus der Gruppe bestehend aus Acryloyldimethyltaurat, Acryloyl-1,1-dimethyl-2methyltaurat, Acryloyltaurat, Acryloyl-N-methyltaurat.

**3.** Polymer nach Anspruch 1 und/oder 2, **dadurch gekennzeichnet, dass** die Struktureinheiten der Formel (2) abgeleitet sind von Methacrylsäure, Acrylsäure Carboxyethylacrylat oder höheren Oligomeren der Formel (2), worin n eine ganze Zahl von 2 oder mehr ist.

**4.** Polymer nach einem oder mehreren der Ansprüche 1 bis 3, **dadurch gekennzeichnet, dass** die Struktureinheiten der Formel (3) abgeleitet sind von Acrylamid, N-Methylacrylamid, N-Ethylacrylamid, N,N-Diethylmethacrylamid, N,N-Diethylacrylamid, N,N-Dimethylmethacrylamid, N,N-Dimethylacrylamid, N-Isopropylacrylamid, N-tert. Butylacrylamid und N-Butylacrylamid.

**5.** Polymer nach einem oder mehreren der Ansprüche 1 bis 4, **dadurch gekennzeichnet, dass** $Q^+$ in Formel (1) ausgewählt ist aus $NH_4^+$, $Na^+$ und Mischungen aus diesen Ionen ist und $X^+$ in Formel (2) ausgewählt ist aus $H^+$, $NH_4^+$, $Na^+$ und Mischungen aus diesen Ionen .

**6.** Polymere nach einem oder mehreren der Ansprüche 1 bis 5, die 27,5 bis 32,5 mol-% der Struktureinheiten (1), 4,5 bis 7,5 der Struktureinheiten (2) und 60 bis 68 mol-% der Struktureinheiten (3) enthalten.

**7.** Polymere nach einem oder mehreren der Ansprüche 1 bis 6, worin der Neutralisationsgrad der Struktureinheiten der Formel (1) 95 bis 100 mol-% ist.

**8.** Polymere nach einem oder mehreren der Ansprüche 1 bis 7, worin in mindestens 70 % aller Struktureinheiten der Formel (2) n = 0 ist.

**9.** Polymere nach einem oder mehreren der Ansprüche 1, 2, 4, 5, und 7, worin n für 0 oder 1 steht.

**10.** Polymere nach einem oder mehreren der Ansprüche 1 bis 9, worin Formel (3) von Acrylamid abgeleitet ist.

**11.** Polymer nach einem oder mehreren der Ansprüche 1, 5 und 7, worin Formel (1) für Acryloyldimethyltaurat, Formel (2) für Acrylsäure und Formel (3) für Acrylamid steht.

**12.** Polymere nach einem oder mehreren der Ansprüche 1 bis 11, **dadurch gekennzeichnet, dass** es Struktureinheiten von

a) 27,5 bis 32,5 mol-% Acryloyldimethyltaurat,
b) 4,5 bis 7,5 mol-% Acrylsäure, und
c) 60 bis 68 mol- % Acrylamid enthält.

**13.** Verfahren zur Herstellung von Polymeren nach einem oder mehreren der Ansprüche 1 bis 12, **dadurch gekennzeichnet, dass** Monomere, aus denen sich die Struktureinheiten der Komponenten a) bis c) ableiten, in einem polaren Lösungsmittel, in Fällung radikalisch polymerisiert werden, und gegebenenfalls die Monomere vor der Polymerisation oder das Polymer nach der Polymerisation mit Ammoniak, Ammoniumkarbonat oder organischen Aminen oder einer $Li^+$-, $Na^+$-, $K^+$-, $Ca^{++}$-, $Mg^{++}$-, $Zn^{++}$- oder $Al^{+++}$-enthaltenden Base neutralisiert werden.

**14.** Verfahren nach Anspruch 13, **dadurch gekennzeichnet, dass** das polare Lösungsmittel einen Siedepunkt von 60 bis 110 °C, vorzugsweise von 60 bis 85 °C, besonders bevorzugt von 70 bis 85 °C aufweist.

**15.** Verfahren nach Anspruch 13 und/oder 14, **dadurch gekennzeichnet, dass** das polare Lösungsmittel ein Lösungsmittelgemisch aus

d) Wasser

und
e) einem oder mehreren weiteren polaren Lösungsmitteln ist.

16. Verfahren nach einem oder mehreren der Ansprüche 13 bis 15, **dadurch gekennzeichnet, dass** das polare Lösungsmittel Methanol, Ethanol, 1-Propanol, 2-Propanol, 2-Methyl-2-Propanol, 1-Butanol, 2-Butanol, Dimethylketon, Diethylketon, Pentan-2-on, Butanon, Tetrahydropyran, Tetrahydrofuran, 2-Methyltetrahydrofuran, 1,3-Dioxan oder 1,4-Dioxan enthält.

17. Verfahren nach nach einem oder mehreren der Ansprüche 13 bis 16, worin das polare Lösemittel 2-Methylpropan-2-ol enthält.

18. Verfahren nach einem oder mehreren der Ansprüche 13 bis 17, **dadurch gekennzeichnet, dass** das polare Lösungsmittel 1 bis 5 Gew.-% Wasser enthält.

19. Verfahren nach einem oder mehreren der Ansprüche 13 bis 18, **dadurch gekennzeichnet, dass** 27,5 bis 32,5 mol-% Acryloyldimethyltaurat, und 4,5 bis 7,5 mol-% Acrylsäure, 60 bis 68 mol-% Acrylamid einer Mischung aus 1 bis 8 Gew.-% Wasser und 92 bis 99 Gew.-% 2-Methylpropan-2-ol, in Fällung radikalisch polymerisiert werden und gegebenenfalls die Monomere vor der Polymerisation oder das Polymer nach der Polymerisation mit Ammoniak, Ammoniumkarbonat, Natriumhydroxid, Natriumkarbonat neutralisiert werden.

20. Verwendung eines Polymers nach einem oder mehreren der Ansprüche 1 bis 12 als Fluid Loss Additiv in Zementformulierungen.

21. Verwendung nach Anspruch 20, worin die Menge an Polymer bei 0,05 bis 5 Gew.-%, bezogen auf das Gewicht der Zementformulierung, liegt.

22. Verfahren zur Zementierung von Tiefenbohrungen unter Verwendung einer Zementschlämme, wobei die Zementschlämme ein Polymer gemäß einem oder mehreren der Ansprüche 1 bis 12 enthält.

23. Verfahren nach Anspruch 22, worin der Gehalt an Polymer 0,05 bis 5 Gew.-%, bezogen auf die Zementschlämme, beträgt.

24. Polymermischung, enthaltend 25 bis 75 Gew.-% eines Polymers nach einem oder mehreren der Ansprüche 1 bis 12 und 25 bis 75 Gew.-% Stärke, chemisch modifizierte Stärke oder thermisch modifizierte Stärke.

## Claims

1. A water-soluble or water-swellable polymer having a k value of 100 to 300, measured in 0.5% by weight solution in distilled water, containing

a) 25 - 35 mol% of one or more recurrent structural units of the formula (1)

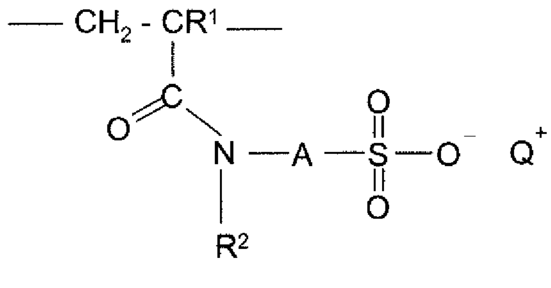

(1)

in which

$R^1$, $R^2$ are hydrogen, methyl or ethyl,
A is linear or branched $C_1$-$C_{12}$-alkylene, and
$Q^+$ is $H^+$, $NH_4^+$, $Li^+$, $Na^+$, $K^+$, ½ $Ca^{++}$, ½ $Mg^{++}$, ½ $Zn^{++}$, 1/3 $Al^{+++}$, organic ammonium ions of the formula

$[HNR^5R^6R^7]^+$ where $R^5$, $R^6$ and $R^7$ may each independently be hydrogen, a linear or branched alkyl group having 1 to 22 carbon atoms, a linear or branched, mono- or polyunsaturated alkenyl group having 2 to 22 carbon atoms, a $C_6$-$C_{22}$-alkylamidopropyl group, a linear monohydroxyalkyl group having 2 to 10 carbon atoms or a linear or branched dihydroxyalkyl group having 3 to 10 carbon atoms, and where at least one of the $R^5$, $R^6$ and $R^7$ radicals is not hydrogen, or mixtures of these ions,

b) 3 to 8 mol% of one or more recurrent structural units of the formula (2)

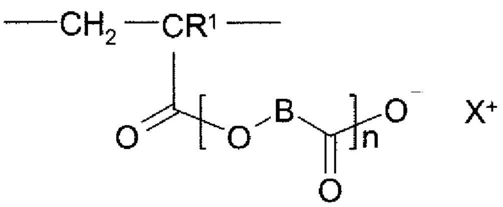

(2)

in which

$R^1$ is hydrogen, methyl or ethyl,
$X^+$ is $H^+$, $NH_4^-$, $Li^+$, $Na^+$, $K^+$, ½ $Ca^{++}$, ½ $Mg^{++}$, ½ $Zn^{++}$, ½ $Al^{+++}$, organic ammonium ions of the formula $[HNR^5R^6R^7]^+$ where $R^5$, $R^6$ and $R^7$ may each independently be hydrogen, a linear or branched alkyl group having 1 to 22 carbon atoms, a linear or branched, mono- or polyunsaturated alkenyl group having 2 to 22 carbon atoms, a $C_6$-$C_{22}$-alkylamidopropyl group, a linear monohydroxyalkyl group having 2 to 10 carbon atoms or a linear or branched dihydroxyalkyl group having 3 to 10 carbon atoms, and where at least one of the $R^5$, $R^6$ and $R^7$ radicals is not hydrogen, or mixtures of these ions,
B is a chemical bond, or a linear or branched alkylene group having 1 to 6 carbon atoms, and
n is an integer from 0 to 5,

and
c) 57 to 72 mol% of one or more recurrent structural units of the formula (3)

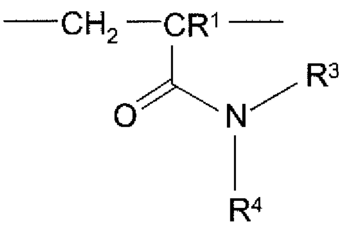

(3)

in which

$R^1$ is hydrogen, methyl or ethyl, and
$R^3$ and $R^4$ are each independently hydrogen, methyl, ethyl, n-propyl, isopropyl or butyl.

**2.** A polymer as claimed in claim 1, wherein the structural units of the formula (1) are derived from monomers from the group consisting of acryloyldimethyltaurate, acryloyl-1,1-dimethyl-2-methyltaurate, acryloyltaurate, acryloyl-N-methyltaurate.

**3.** A polymer as claimed in claim 1 and/or 2, wherein the structural units of the formula (2) are derived from methacrylic acid, acrylic acid, carboxyethyl acrylate or higher oligomers of the formula (2) in which n is an integer of 2 or more.

**4.** A polymer as claimed in one or more of claims 1 to 3, wherein the structural units of the formula (3) are derived from acrylamide, N-methylacrylamide, N-ethylacrylamide, N,N-diethylmethacrylamide, N,N-diethylacrylamide, N,N-dimethylmethacrylamide, N,N-dimethylacrylamide, N-isopropylacrylamide, N-tert-butylacrylamide and N-butylacrylamide.

**5.** A polymer as claimed in one or more of claims 1 to 4, wherein $Q^+$ in formula (1) is selected from $NH_4^+$, $Na^+$ and

mixtures of these ions and $X^+$ in formula (2) is selected from $H^+$, $NH_4^+$, $Na^+$ and mixtures of these ions.

**6.** A polymer as claimed in one or more of claims 1 to 5, containing 27.5 to 32.5 mol% of the structural units (1), 4.5 to 7.5 of the structural units (2) and 60 to 68 mol% of the structural units (3).

**7.** A polymer as claimed in one or more of claims 1 to 6, in which the neutralization level of the structural units of the formula (1) is 95 to 100 mol%.

**8.** A polymer as claimed in one or more of claims 1 to 7, in which n = 0 in at least 70% of all the structural units of the formula (2).

**9.** A polymer as claimed in one or more of claims 1, 2, 4, 5 and 7, in which n is 0 or 1.

**10.** A polymer as claimed in one or more of claims 1 to 9, in which formula (3) is derived from acrylamide.

**11.** A polymer as claimed in one or more of claims 1, 5 and 7, in which formula (1) represents acryloyldimethyltaurate, formula (2) represents acrylic acid and formula (3) represents acrylamide.

**12.** A polymer as claimed in one or more of claims 1 to 11, which contains structural units of

a) 27.5 to 32.5 mol% of acryloyldimethyltaurate,
b) 4.5 to 7.5 mol% of acrylic acid, and
c) 60 to 68 mol% of acrylamide.

**13.** A process for preparing polymers as claimed in one or more of claims 1 to 12, wherein monomers from which the structural units of components a) to c) derive are subjected to free-radical precipitation polymerization in a polar solvent, and the monomers are optionally neutralized prior to the polymerization, or the polymer is optionally neutralized after the polymerization, with ammonia, ammonium carbonate or organic amines or an $Li^+$-, $Na^+$-, $K^+$-, $Ca^{++}$-, $Mg^{++}$-, $Zn^{++}$- or $Al^{++}$-containing base.

**14.** The process as claimed in claim 13, wherein the polar solvent has a boiling point of 60 to 110°C, preferably of 60 to 85°C, more preferably of 70 to 85°C.

**15.** The process as claimed in claim 13 and/or 14, wherein the polar solvent is a solvent mixture of

d) water and
e) one or more further polar solvents.

**16.** The process as claimed in one or more of claims 13 to 15, wherein the polar solvent comprises methanol, ethanol, 1-propanol, 2-propanol, 2-methyl-2-propanol, 1-butanol, 2-butanol, dimethyl ketone, diethyl ketone, pentan-2-one, butanone, tetrahydropyran, tetrahydrofuran, 2-methyltetrahydrofuran, 1,3-dioxane or 1,4-dioxane.

**17.** The process as claimed in one or more of claims 13 to 16, in which the polar solvent comprises 2-methylpropan-2-ol.

**18.** The process as claimed in one or more of claims 13 to 17, wherein the polar solvent comprises 1% to 5% by weight of water.

**19.** The process as claimed in one or more of claims 13 to 18, wherein 27.5 to 32.5 mol% of acryloyldimethyltaurate, and 4.5 to 7.5 mol% of acrylic acid, 60 to 68 mol% of acrylamide is subjected to free-radical precipitation polymerization a mixture of 1% to 8% by weight of water and 92% to 99% by weight of 2-methylpropan-2-ol, and the monomers prior to the polymerization or the polymer after the polymerization are/is optionally neutralized with ammonia, ammonium carbonate, sodium hydroxide, sodium carbonate.

**20.** The use of a polymer as claimed in one or more of claims 1 to 12 as a fluid loss additive in cement formulations.

**21.** The use as claimed in claim 20, in which the amount of polymer is 0.05% to 5% by weight, based on the weight of the cement formulation.

**22.** A method for cementing deep wells using a cement slurry, wherein the cement slurry comprises a polymer as claimed in one or more of claims 1 to 12.

**23.** The method as claimed in claim 22, in which the polymer content is 0.05% to 5% by weight, based on the cement slurry.

**24.** A polymer mixture containing 25% to 75% by weight of a polymer as claimed in one or more of claims 1 to 12 and 25% to 75% by weight of starch, chemically modified starch or thermally modified starch.

## Revendications

**1.** Polymères solubles dans l'eau ou pouvant gonfler dans l'eau, ayant une valeur k de 100 à 300, mesurée dans une solution à 0,5 % en poids dans de l'eau distillée, contenant :

a) 25 à 35 % en moles d'une ou de plusieurs unités structurales de répétition de formule (1)

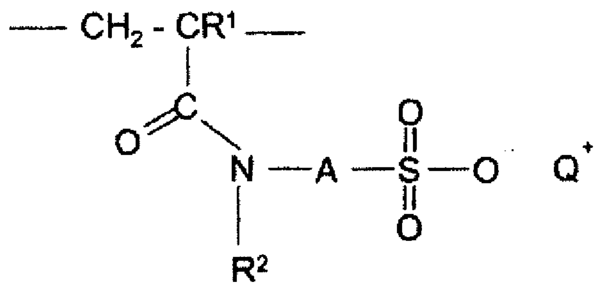

(1)

dans laquelle

$R^1$, $R^2$ signifient hydrogène, méthyle ou éthyle,
A signifie alkylène en $C_1$-$C_{12}$ linéaire ou ramifié, et
$Q^+$ représente $H^+$, $NH_4^+$, $Li^+$, $Na^+$, $K^+$, ½ $Ca^{++}$, ½ $Mg^{++}$, ½ $Zn^{++}$, ⅓ $Al^{+++}$, les ions ammonium organiques de formule $[HNR^5R^6R^7]^+$, $R^5$, $R^6$ et $R^7$ pouvant être indépendamment les uns des autres l'hydrogène, un groupe alkyle linéaire ou ramifié de 1 à 22 atomes de carbone, un groupe alcényle linéaire ou ramifié, mono- ou polyinsaturé, de 2 à 22 atomes de carbone, un groupe alkylamidopropyle en $C_6$-$C_{22}$, un groupe monohydroxyalkyle linéaire de 2 à 10 atomes de carbone ou un groupe dihydroxyalkyle linéaire ou ramifié de 3 à 10 atomes de carbone, et au moins un des radicaux $R^5$, $R^6$ et $R^7$ n'étant pas l'hydrogène, ou des mélanges de ces ions,

b) 3 à 8 % en moles d'une ou de plusieurs unités structurales de répétition de formule (2)

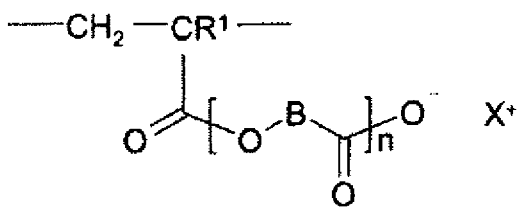

(2)

dans laquelle

$R^1$ signifie hydrogène, méthyle ou éthyle,
$X^+$ représente $H^+$, $NH_4^+$, $Li^+$, $Na^+$, $K^+$, ½ $Ca^{++}$, ½ $Mg^{++}$, ½ $Zn^{++}$, ⅓ $Al^{+++}$, les ions ammonium organiques de formule $[HNR^5R^6R^7]^+$, $R^5$, $R^6$ et $R^7$ pouvant être indépendamment les uns des autres l'hydrogène, un groupe alkyle linéaire ou ramifié de 1 à 22 atomes de carbone, un groupe alcényle linéaire ou ramifié, mono- ou polyinsaturé, de 2 à 22 atomes de carbone, un groupe alkylamidopropyle en $C_6$-$C_{22}$, un groupe monohydroxyalkyle linéaire de 2 à 10 atomes de carbone ou un groupe dihydroxyalkyle linéaire ou ramifié de 3 à 10 atomes de carbone, et au moins un des radicaux $R^5$, $R^6$ et $R^7$ n'étant pas l' hydrogène, ou des mélanges de ces ions,

B est une liaison chimique ou un groupe alkylène linéaire ou ramifié de 1 à 6 atomes de carbone, et
n est un nombre entier de 0 à 5,

et

c) 57 à 72 % en moles d'une ou de plusieurs unités structurales de répétition de formule (3)

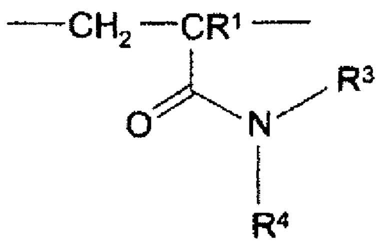

(3)

dans laquelle

$R^1$ signifie hydrogène, méthyle ou éthyle, et
$R^3$ et $R^4$ signifient indépendamment l'un de l'autre hydrogène, méthyle, éthyle, n-propyle, iso-propyle ou butyle.

2. Polymère selon la revendication 1, **caractérisé en ce que** les unités structurales de formule (1) sont dérivées de monomères du groupe constitué par le taurate d'acryloyldiméthyle, le taurate d'acryloyl-1,1-diméthyl-2-méthyle, le taurate d'acryloyle, le taurate d'acryloyl-N-méthyle.

3. Polymère selon la revendication 1 et/ou 2, **caractérisé en ce que** les unités structurales de formule (2) sont dérivées d'acide méthacrylique, d'acide acrylique, d'acrylate de carboxyéthyle ou d'oligomères supérieurs de formule (2) dans lesquels n est un nombre entier supérieur ou égal à 2.

4. Polymère selon une ou plusieurs des revendications 1 à 3, **caractérisé en ce que** les unités structurales de formule (3) sont dérivées d'acrylamide, de N-méthyl-acrylamide, de N-éthylacrylamide, de N,N-diéthyl-méthacrylamide, de N,N-diéthylacrylamide, de N,N-diméthylméthacrylamide, de N,N-diméthylacrylamide, de N-isopropylacrylamide, de N-tert.-butylacrylamide et de N-butylacrylamide.

5. Polymère selon une ou plusieurs des revendications 1 à 4, **caractérisé en ce que** $Q^+$ dans la formule (1) est choisi parmi $NH_4^+$, $Na^+$ et les mélanges de ces ions, et $X^+$ dans la formule (2) est choisi parmi $H^+$, $NH_4^+$, $Na^+$ et les mélanges de ces ions.

6. Polymères selon une ou plusieurs des revendications 1 à 5, qui contiennent 27,5 à 32,5 % en moles des unités structurales (1), 4,5 à 7,5 % en moles des unités structurales (2) et 60 à 68 % en moles des unités structurales (3).

7. Polymères selon une ou plusieurs des revendications 1 à 6, dans lesquels le degré de neutralisation des unités structurales de formule (1) est de 95 à 100 % en moles.

8. Polymères selon une ou plusieurs des revendications 1 à 7, dans lesquels n = 0 dans au moins 70 % de toutes les unités structurales de formule (2).

9. Polymères selon une ou plusieurs des revendications 1, 2, 4, 5 et 7, dans lesquels n représente 0 ou 1.

10. Polymères selon une ou plusieurs des revendications 1 à 9, dans lesquels la formule (3) est dérivée d'acrylamide.

11. Polymère selon une ou plusieurs des revendications 1, 5 et 7, dans lequel la formule (1) représente le taurate d'acryloyldiméthyle, la formule (2) représente l'acide acrylique et la formule (3) représente l'acrylamide.

12. Polymères selon une ou plusieurs des revendications 1 à 11, **caractérisés en ce qu'**ils contiennent des unités structurales de :

a) 27,5 à 32,5 % en moles de taurate d'acryloyldiméthyle,

b) 4,5 à 7,5 % en moles d'acide acrylique et
c) 60 à 68 % en moles d'acrylamide.

**13.** Procédé de fabrication de polymères selon une ou plusieurs des revendications 1 à 12, **caractérisé en ce que** les monomères desquels les unités structurales des composants a) à c) dérivent sont polymérisés par voie radicalaire en précipitation dans un solvant polaire, et les monomères avant la polymérisation ou le polymère après la polymérisation sont éventuellement neutralisés avec de l'ammoniac, du carbonate d'ammonium ou des amines organiques ou une base contenant $Li^+$, $Na^+$, $K^+$, $Ca^{++}$, $Mg^{++}$, $Zn^{++}$ ou $Al^{+++}$.

**14.** Procédé selon la revendication 13, **caractérisé en ce que** le solvant polaire présente un point d'ébullition de 60 à 110 °C, de préférence de 60 à 85 °C, de manière particulièrement préférée de 70 à 85 °C.

**15.** Procédé selon la revendication 13 et/ou 14, **caractérisé en ce que** le solvant polaire est un mélange de solvants constitué par :

d) de l'eau
et
e) un ou plusieurs autres solvants polaires.

**16.** Procédé selon une ou plusieurs des revendications 13 à 15, **caractérisé en ce que** le solvant polaire contient du méthanol, de l'éthanol, du 1-propanol, du 2-propanol, du 2-méthyl-2-propanol, du 1-butanol, du 2-butanol, de la diméthylcétone, de la diéthylcétone, de la pentan-2-one, de la butanone, du tétrahydropyrane, du tétrahydrofurane, du 2-méthyltétrahydrofurane, du 1,3-dioxane ou du 1,4-dioxane.

**17.** Procédé selon une ou plusieurs des revendications 13 à 16, dans lequel le solvant polaire contient du 2-méthylpropan-2-ol.

**18.** Procédé selon une ou plusieurs des revendications 13 à 17, **caractérisé en ce que** le solvant polaire contient 1 à 5 % en poids d'eau.

**19.** Procédé selon une ou plusieurs des revendications 13 à 18, **caractérisé en ce que** 27,5 à 32,5 % en moles de taurate d'acryloyldiméthyle et 4,5 à 7,5 % en moles d'acide acrylique, 60 à 68 % en moles d'acrylamide sont polymérisés par voie radicalaire en précipitation dans un mélange de 1 à 8 % en poids d'eau et 92 à 99 % en poids de 2-méthylpropan-2-ol, et les monomères avant la polymérisation ou le polymère après la polymérisation sont éventuellement neutralisés avec de l'ammoniac, du carbonate d'ammonium, de l'hydroxyde de sodium, du carbonate de sodium.

**20.** Utilisation d'un polymère selon une ou plusieurs des revendications 1 à 12 en tant qu'additif de perte de fluide dans des formulations de ciment.

**21.** Utilisation selon la revendication 20, dans laquelle la quantité de polymère est de 0,05 à 5 % en poids, par rapport au poids de la formulation de ciment.

**22.** Procédé de cimentation de forages en profondeur utilisant un coulis de ciment, le coulis de ciment contenant un polymère selon une ou plusieurs des revendications 1 à 12.

**23.** Procédé selon la revendication 22, dans lequel la teneur en polymère est de 0,05 à 5 % en poids, par rapport au coulis de ciment.

**24.** Mélange de polymère, contenant 25 à 75 % en poids d'un polymère selon une ou plusieurs des revendications 1 à 12 et 25 à 75 % en poids d'amidon, d'amidon modifié chimiquement ou d'amidon modifié thermiquement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2614998 A
- US 2865876 A
- US 2905565 A
- US 3052628 A
- US 5472051 A
- WO 99026991 A
- EP 1045869 A
- US 4015991 A
- EP 0116671 A
- US 5025040 A
- US 4931489 A
- EP 0217608 A
- US 4555269 A
- EP 0157055 A
- EP 0244981 A
- US 4800071 A
- US 4342653 A
- JP 11310751 B
- JP 63060240 B
- WO 9926991 A


### In der Beschreibung aufgeführte Nicht-Patentliteratur


- **VON BERND TIEKE.** Makromolekulare Chemie: Eine Einführung. Wiley-VCH, 09. September 2005